# EUROPÄISCHE PATENTSCHRIFT

(11) **EP 2 110 754 B1**
(45) Veröffentlichungstag und Bekanntmachung des Hinweises auf die Patenterteilung: **13.02.2019**
(21) Anmeldenummer: 08022031.2
(22) Anmeldetag: 25.09.2005
(51) Int. Cl.: H04L 12/407, H04L 12/40, H04L 12/413, H04L 12/46, G06F 13/38, G06F 13/42, G05B 19/042

(54) **Verfahren und Vorrichtung zur Synchronisation von Busteilnehmern eines Automatisierungssystems**
Methods and apparatus for synchronising bus participants of an automation system
Procédés et dispositif de synchronisation de participants à un bus d'un système d'automatisation

(30) Priorität: 23.06.2005 DE 102005029656; 23.06.2005 DE 102005029654; 23.06.2005 DE 102005029655
(43) Veröffentlichungstag der Anmeldung: 21.10.2009
(62) Teilanmeldung aus: 05798012.0
(73) Patentinhaber: Hilscher Gesellschaft Für Systemautomation MBH, 65795 Hattersheim (DE); Hilscher, Hans Jürgen, 65795 Hattersheim (DE)
(72) Erfinder: Hilscher, Hans Jürgen, 65795 Hattersheim (DE)
(74) Vertreter: Dreykorn-Lindner, Werner

(56) Entgegenhaltungen:
- DE-A1- 10 053 525
- DE-A1- 10 258 469
- US-A- 5 988 846
- HOSEK M: "Clustered-architecture motion control system utilizing IEEE 1394b communication network" AMERICAN CONTROL CONFERENCE, 2005. PROCEEDINGS OF THE 2005 PORTLAND, OR, USA JUNE 8-10, 2005, PISCATAWAY, NJ, USA,IEEE, 8. Juni 2005 (2005-06-08), Seiten 2939-2945, XP010820243 ISBN: 0-7803-9098-9

## Beschreibung

Die Erfindung betrifft in erster Linie ein Verfahren und eine Vorrichtung zur Datenkommunikation, insbesondere zur Synchronisation von untereinander über einen seriellen Datenbus kommunizierenden Busteilnehmern eines Automatisierungssystems mit verteilter Steuerung gemäß den Patentansprüchen 1 oder 2 und 10.

Seit längerem ist es bekannt, in der Steuer- und Automatisierungstechnik Feldbusse und Ethernet, insbesondere die Erweiterung bezüglich Real-Time Ethernet zur Datenkommunikation zwischen einzelnen, an der Steuerung eines Prozesses beteiligten Einheiten zu verwenden. Beispiele für bekannte Feldbusse sind CAN-Bus, Profibus, Modbus, DeviceNet oder Interbus. Die Kommunikation der Einheiten erfolgt auf dem Feldbus/Ethernet anhand von spezifizierten Protokollen. Um der Forderung nach offenen Systemen zur Vernetzung entsprechen zu können, besteht die Notwendigkeit, einfache und kostengünstige Kommunikationsmechanismen zur Verfügung zu stellen, um industrielle Geräte netzwerkfähig zu machen. Diese Forderung besteht vor allem auch im Zusammenhang mit der Kopplung von Antriebskomponenten, wie zwischen Antriebsregelungen, Leistungsteilen und Gebern bei numerisch gesteuerten Werkzeugmaschinen und Robotern, bei denen eine Mehrzahl interpolierender Achsen synchron betrieben werden müssen. Bei der zunehmenden Vernetzung verschiedenster technischer Systeme wächst deshalb die Forderung nach standardisierten Strukturen in der Industrie.

Ein Beispiel hierfür ist der Feldbus nach dem sogenannten Aktuator-Sensor-Interface-Standard, kurz ASI-Standard. Dieses Feldbuskonzept ist speziell darauf abgestimmt, binäre Sensoren oder Aktuatoren direkt busfähig zu machen, was mit anderen Feldbussystemen bislang nicht möglich war. Ein Automatisierungssystem besteht aus mit dem Bussystem koppelbaren Hardwarekomponenten, insbesondere Motoren, Sensoren, Aktuatoren u.a - d.h. der Prozessumgebung - die im Zusammenspiel mit einer oder mehreren übergeordneten Steuerungen einen automatischen Produktionsprozess bilden. Der Busmaster übernimmt dabei alle Aufgaben, die für die Abwicklung des Busbetriebes notwendig sind. Er ist in der Regel getrennt von der eigentlichen Steuereinheit zum Steuern der Hardwarekomponenten.

Um eine fehlersichere Kommunikation der an einem sicherheitskritischen Prozess beteiligten Einheiten zu gewährleisten, wobei gleichzeitig die Verwendung von Standardbausteinen als Busmaster möglich ist, ist aus der DE 199 28 517 C2 ein Steuerungssystem bekannt, bei dem der Busmaster getrennt von einer ersten Steuereinheit und einer Signaleinheit an den Feldbus angeschlossen ist, bei dem die erste Steuereinheit bezogen auf eine Umlaufrichtung des Telegrammverkehrs vor der Signaleinheit angeordnet ist, und bei dem die erste Steuereinheit Mittel aufweist, um Telegrammdaten, die an die Signaleinheit adressiert sind, durch fehlersichere Telegrammdaten zu ersetzen. Dabei ist es möglich, die erste Steuereinheit als einfachen Busteilnehmer, d. h. ohne eine Busmasterfunktionalität an den Feldbus anzuschließen. Weiterhin weist das Steuerungssystem eine zweite Steuereinheit zum Steuern von sicherheitsunkritischen Prozessen auf, welche getrennt von der ersten Steuereinheit an den Feldbus angeschlossen ist. Die zweite Steuereinheit weist neben anderen, an sich bekannten Komponenten einen Mikro-Controller sowie einen Master-Protokollchip auf. Der Master-Protokollchip besitzt im vorliegenden Fall eine Busmasterfunktionalität für einen Interbus und wird als Busmaster bezeichnet. Derartige Master-Protokollchips sind als Standardbauelemente von verschiedenen Herstellern erhältlich. Ein in der ersten Steuereinheit enthaltener Kommunikationsbaustein besitzt einen Slave-Protokollchip, der über einen ersten Busanschluss eingangsseitig und über einen zweiten Busanschluss ausgangsseitig mit dem Feldbus verbunden ist. Der Protokollchip entspricht den in den Signaleinheiten enthaltenen Protokollchips, welche als Busteilnehmer sicherheitsbezogene Einrichtungen an den Feldbus anschließen. Um bei einem Feldbus mit sequentiell umlaufenden Telegrammverkehr auch eine Slave-to-Slave-Kommunikation zwischen Busteilnehmern bereitzustellen, von denen keiner eine Busmasterfunktionalität besitzt, wird der Protokollchip eines Busteilnehmers, der Daten an andere Busteilnehmer versenden will, um einen Sendespeicher und gegebenenfalls einen Empfangsspeicher ergänzt wird. Die Funktionsweise des umlaufenden Telegrammverkehrs basiert also auf dem in jedem Busteilnehmer angeordneten gleichen Slave-Protokoll-Chip, häufig als "Serielles Mikroprozessor Interface" (SUPI) bezeichnet. Durch die Benutzung eines Standardbauelement, das von verschiedenen Herstellern erhältlich ist, können die Kosten des Steuerungssystem niedriger gehalten werden; insgesamt sind die Kosten für den Busmaster und die Signaleinheiten, die für den Feldbus spezifizierten Protokolle gewährleisten müssen, komplex und damit vergleichsweise hoch.

Ein ähnlicher Weg wird bei dem aus dem DE 299 07 909 U1 bekannten und in der Fertigungseinrichtung integrierten Überwachungssystem, basierend auf Einsteckkarten, eingeschlagen. Im einzelnen weist jede Einsteckkarte einen Mikroprozessor, eine Speichereinheit zum Abspeichern der Prozessdaten, die mit dem Mikroprozessor verbunden ist, eine Sensorbus-Schnittstelle (RS 485) und eine Feldbus-Schnittstelle (RS 485), die mit dem Mikroprozessor verbunden sind, eine Service-Schnittstelle (RS-232) zum Anschluss an ein Modem und eine Schnittstelle (ISA-Busschnittstelle) zur Verbindung des Mikroprozessors mit einem Host-Rechner auf. Die integrierte Feldbus-Schnittstelle bzw. Sensorbus-Schnittstelle weist jeweils eine ISO-Schnittstelle und einen Feldbus-Datenprozessor (SPC 3), im vorliegenden Beispiel ein Profibus-Datenprozessor, auf. Eine Maschinensteuerung ist wahlweise über die integrierte Profibus-Schnittstelle mit der Einsteckkarte oder über eine I/O-Box mit Sensor-Elektronikeinheiten verbunden. Die intelligenten Sensor-Elektronikeinheiten ermöglichen jeweils die Versorgung eines Sensors, die Erfassung der Sensordaten, die Messsignalvorverarbeitung (Signalfilterung, -Verstärkung usw.) und die einfache Signalanalyse (digitales Filtern, Erfassen der Spitzenwerte, usw.). Unter einer intelligenten Sensor-Elektronikeinheit wird daher ein Modul verstanden, welches einen eigenen Mikro-Controller, Filter, Verstärker, eine Stromversorgung und eine Sensorbusschnittstelle aufweist. Die Sensor-Elektronikeinheit kann über die Einsteckkarte vor jeder Bearbeitung neu parametriert werden. Dies betrifft z.B. die Verstärkungsfaktoren, die Filterwerte und die Verrechnung mehrerer Eingangssignale zu einem Summensignal. Durch die Profibus-Schnittstelle wird die Überwachung mit dem Bearbeitungsprozess synchronisiert. Über sogenannte automatisierte Einstellroutinen kann das Überwachungssystem einfach in die Fertigungseinrichtung eingebunden werden. Die automatisierten Einstellroutinen führen z.B. die Erkennung der Sprache auf der Steuerung und die damit verbundene Sprachumschaltung, die Erkennung der Sensoren am Sensorbus und die automatische Konfiguration der Verstärkungs- - und Filterwerte durch. Die Ein- und Ausgänge der speicherprogrammierbaren Steuerung (SPS) werden selbständig zugeordnet und die Uhrzeit einer Echtzeit-Uhr auf der Einsteckkarte wird automatisch mit der Uhrzeit des Hostrechners abgeglichen. Die Einsteckkarte erlaubt die Überwachung von beispielsweise bis zu vier Sensorkanälen, wobei mit dem Kommunikationsprozessor für die Sensorbus-Schnittstelle eine Datenrate von bis zu 460,8 kBaud bei gleichzeitig hoher Störsicherheit erreicht wird. Vorzugsweise verarbeitet der Mikroprozessor der Einsteckkarte die Daten im Hammingcode mit einer Hamming-Distanz von 4 und ist für die Verschlüsselung und Entschlüsselung zuständig. Zwischen dem Mikroprozessor und der ISA-Busschnittstelle zum Host-Rechner ist ein Adressdekoder vorgesehen, der auf an sich bekannte Weise für die Kodierung und Dekodierung der Adress- und Speicherzugriffe im PC zuständig ist. Die Spannungsversorgung der Einsteckkarte erfolgt über die ISA-Schnittstelle, über die auch die Kommunikation mit dem Hostrechner erfolgt. Da die Einsteckkarte einen eigenen Prozessor aufweist, der für die Überwachung zuständig ist, wird die CPU des Hostrechners nicht mit Rechenleistung belegt. Für die Kommunikation mit den Sensor-Elektronikeinheiten ist ein echtzeitfähiges Sensorbusprotokoll definiert. Dies ermöglicht die Abfrage der Messdaten sowie die Steuerung und Parametrierung der Sensoren mit definierten Antwortzeiten. Die Überwachungsdaten werden beispielsweise in einem Takt von 10 ms verarbeitet und die Sensordatenvorverarbeitung erlaubt eine Abtastrate unter 1 ms. Damit kann für eine Kollisionsüberwachung eine Reaktionszeit unter 1 ms garantiert werden. Über den Feld- bzw. Profibus können neben den Synchronisationsdaten in vorteilhafter Weise auch prozessspezifische Achssignale wie Drehmomente, Motorströme und Achsgeschwindigkeiten übertragen werden. Das Protokoll kann beispielsweise die Abfrage von bis zu acht verschiedenen Achsen erlauben. Die benötigten Steuerdaten können auch direkt aus dem Steuerkern der Maschinensteuerung über den Feldbus an den Mikroprozessor der Einsteckkarte geliefert werden. In diesem Fall wird keine spezielle Sensorik benötigt und die Sensorbus-Schnittstelle auf der Einsteckkarte kann entfallen. Über die Service-Schnittstelle können alle Einstellungen, Software-Updates sowie die Prozessvisualisierung erfolgen. Durch die Auslegung als Modemschnittstelle sind über ein Modem Teleservice- und Ferndiagnose-Funktionalitäten verfügbar. Dadurch ist das System aus der Ferne voll bedien- und parametrierbar. Die Visualisierung der Prozessdaten kann über ein Programm auf dem Hostrechner (Steuerung, Industrie-PC) erfolgen. Nachteilig ist wieder, dass die Einsteckkarten und die intelligenten Sensor-Elektronikeinheiten, die für den Feldbus spezifizierten Protokolle gewährleisten müssen, komplex und damit vergleichsweise teuer sind.

Weiterhin ist aus der DE 198 31 405 A1 ein Steuerungssystem mit einem Personalcomputer bekannt, der zur Bearbeitung eines Steuerprogramms zumindest einen PC-Prozessor, einen Programmspeicher und einen Datenspeicher aufweist und der mit einem Kommunikationsprozessor zur Anschaltung an einen Feldbus versehen ist, an den Sensoren und/oder Aktuatoren zur Steuerung eines Prozesses anschließbar sind. Zur Kommunikation am Feldbus ist in dem Personalcomputer eine Steckkarte gesteckt, die an einen internen PCI-Bus, der Daten-, Steuer- und Adressleitungen besitzt, angeschlossen ist. Über eine PCI-Busanschaltung und den internen Bus kommuniziert der PC-Prozessor mit den Komponenten der Steckkarte. Auf der Steckkarte ist der Kommunikationsprozessor angeordnet, der nach einer entsprechenden Parametrierung durch den PC-Prozessor selbständig eine zyklische Datenübertragung am Feldbus durchführt und im wesentlichen aus einem ASIC besteht. Der Kommunikationsprozessor ist als Master an einem Feldbus mit zyklischer Datenübertragung nach Art des PROFIBUS DP betreibbar und hat die Funktion eines "Taktschlägers" bei der Erfassung der Prozessdaten. Weiterhin ist ein Speicher vorgesehen, in welchem die am Feldbus eingegangenen Prozessdaten abgelegt werden. Dieser Speicher hält damit ein aktuelles Prozessabbild, auf das durch den PC-Prozessor jederzeit zugegriffen werden kann. Um den PC-Prozessor von dem Pollen der eingegangenen Prozessdaten oder von dem Überwachen des Feldbuszyklus zu entlasten, ist eine Überwachungseinheit vorgesehen. Die Überwachungseinheit kann durch eine parametrierbare Hardwareschaltung realisiert werden, aber auch eine Softwarelösung durch eine Erweiterung des Kommunikationsprozessorprogramms ist möglich. Dabei besteht die Hardwareschaltung aus einem kleinen RAM, der in den Adressraum des PC-Prozessors eingegliedert ist und daher von diesem direkt adressiert werden kann, sowie aus einem programmierbaren Logikbaustein, der entsprechend einer im RAM abgelegten Parametrierung die zyklische Datenübertragung am Feldbus und/oder am Feldbus eingegangene Daten überwacht. Bei Anlauf des Steuerprogramms im Programmspeicher greift der PC-Prozessor auf das RAM zu und setzt dort die entsprechenden Bits, um die Funktion der Überwachungseinheit in der gewünschten Weise zu bestimmen. Durch diese Parametrierung wird beispielsweise festgelegt, in welchen Fällen die Überwachungseinheit einen Interrupt erzeugen soll, der über die PCI-Busanschaltung und den PCI-Bus an den PC-Prozessor weitergeleitet wird. Damit wird festgelegt, bei welchen Ereignissen der PC-Prozessor zur Weiterverarbeitung der am Feldbus eingegangenen Daten durch das Steuerprogramm veranlasst werden soll. Bei aktiver Prozesssteuerung pollt der Kommunikationsprozessor als Master fortwährend die Teilnehmer, beispielsweise Sensoren wie ein Durchfluss- bzw. ein Füllstandsmessumformer, oder Aktuatoren wie ein Zu- bzw. ein Ablaufventil an einem Tank, am Feldbus, die als Slaves betrieben werden. Wenn durch den Kommunikationsprozessor die Prozessdaten eines Slaves eingelesen wurden, will er sie in die Speicherzellen des Speichers eintragen, die für die jeweiligen Prozessdaten vorgesehen sind. Der Logikbaustein der Überwachungseinheit überprüft anhand der Adresse des Schreibzugriffs, ob bei einer Änderung der jeweiligen Prozessdaten ein Interrupt erzeugt werden muss. Diese Überprüfung ist in einfacher Weise möglich, da die Prozessdaten der einzelnen Slaves jeweils an festen Speicherplätzen innerhalb des Speichers abgelegt sind. Soll ein Interrupt bei einer Änderung der jeweiligen Daten erzeugt werden, so vergleicht ein im Logikbaustein realisierter Datenkomparator die durch den Kommunikationsprozessor auf den Bus gelegten Daten mit den früheren Prozessdaten, die durch den Logikbaustein zuvor aus dem Speicher ausgelesen wurden. Da der Vergleich der aktuell eingegangenen Daten mit den früheren Prozessdaten sowie die Interrupt-Generierung durch eine in Hardware realisierte Überwachungseinheit durchgeführt wird, ist in vorteilhafter Weise eine sehr schnelle Reaktion des Steuerungssystems auf Änderungen der Prozessdaten möglich. Nachteilig ist wieder, dass Kommunikationsprozessor und Überwachungseinheit, die für den Feldbus spezifizierten Protokolle gewährleisten müssen, komplex und damit vergleichsweise teuer sind.

Auch ist die Nutzung der (Fast)-Ethernet-Übertragungstechnik bei der Vernetzung verschiedener Kommunikationssysteme bekannt. Beispielsweise ist aus der DE 100 47 925 A1 ein Verfahren zur Echtzeitkommunikation zwischen mehreren Netzwerkteilnehmern in einem Kommunikationssystem mit Ethernet-Physik bekannt, bei dem eine Mastereinheit und ein oder mehrere Slaveeinheiten mittels über das Netzwerk übertragenen Telegrammen miteinander kommunizieren, ein zyklischer Austausch der Telegramme mit äquidistanten Abtastzeitpunkten stattfindet, indem jede Slaveeinheit auf die Mastereinheit durch eine gemeinsame Zeitbasis synchronisiert wird und eine Zugriffssteuerung für den Sendebetrieb und Empfangsbetrieb zwischen den Netzwerkteilnehmern über ein Zeitschlitz-Zugriffsverfahren erfolgt. Die Anforderungen an die Leistungsfähigkeit von Kommunikationssystemen sind in der Automatisierungstechnik, z. B. bei der Kopplung von Antriebskomponenten, besonders groß. Beim Datenaustausch zwischen Gebern, Leistungsteilen und einer Antriebsregelung ist die Datenübertragungszeit, die als Totzeit in die Regelschleife eingeht, eine besonders wichtige Größe. Je kleiner diese Totzeit ist, desto höhere Dynamik kann mit dem Regelungssystem erreicht werden. Da es in der Automatisierungstechnik sowohl auf eine hochgenaue Einhaltung der Echtzeitbedingung als auch auf eine hohe Sicherheit der Übertragung ankommt, wird die genormte Übertragungsschicht 2 (Telegrammrahmen und Zugriffsverfahren) des (Fast)-Ethernet, die diese Anforderungen nicht erfüllt, durch einen neuen Telegrammrahmen und eine neue Zugriffsteuerung vollständig neu definiert und damit die Ethernet-Physik als Basis für eine Echtzeitkommunikation zwischen beispielsweise Antriebskomponenten genutzt. Dabei kann sowohl die Kommunikation zwischen der Regelungseinheit und den Gebern und Leistungsteilen als auch die Verbindung zu einer Bewegungssteuerung realisiert werden. Um einen zyklischen Datenaustausch mit gleichen Abtastzeitpunkten realisieren zu können, wird eine gemeinsame Zeitbasis für den Master und alle Slaves hergestellt. Die Synchronisierung der Slaves auf den Master erfolgt durch speziell ausgezeichnete, zeitlich definierten Telegramme des Masters an die Slaves und individuell parametrierte Zeitzähler in den Slaves. Die Nutzdaten können in einem Telegrammrahmen transportiert werden, der neben der Slave-Adressierung und Telegrammlängeninformation die Absicherung der Datenintegrität mittels beispielsweise einer CRC-Checksumme und weitere sicherheitsrelevante Datenbereiche zur Verfügung stellt. Die Daten im Telegrammrahmen können nicht nur von einem Applikationsprozessor, sondern auch von einem Kommunikationsbaustein ausgewertet werden, was einen zweiten Auslösekanal ermöglicht. Obwohl die zur Anwendung kommende Übertragungstechnik nach dem Ethernet-Standard prinzipiell nur Punkt-zu-Punkt-Verbindungen erlaubt, kann wie bei (Fast)-Ethernet Netzen auch durch die Verwendung von Netzknoten (sogenannte HUBs) die Bildung von Netzwerken ermöglicht werden, indem mehrere oder jeder Netzwerkteilnehmer über einen Schaltungsteil zur Bildung von Netzknoten verfügt, der zur Weiterleitung der Telegramme in Richtung einer anderen Mastereinheit oder weiterer Slaveeinheiten dient. Dadurch können auch hierarchische Netzwerke mit über Netzknoten verbundenen Punkt-zu-Punkt-Verbindungen mit Ethernet-Physik zur Durchführung einer Echtzeitkommunikation in größeren Netztopologien erstellt werden. Dieses eignet sich auch zur Vernetzung bzw. Kopplung eines verteilten Antriebssystems, indem ein erstes Kommunikationssystem eine numerische Bewegungssteuerung als Mastereinheit und mindestens eine Regelungseinheit als Slaveeinheit umfasst, wobei jede Regelungseinheit als Mastereinheit eines weiteren Kommunikationssystems dient, welches mindestens ein Leistungsteil zur Ansteuerung eines Motors und ein zugeordnetes Gebersystem als Slaveeinheiten aufweist. Über die Fast Ethernet-Leitungstreiber innerhalb jedes Netzwerkteilnehmers und eventuelle Netzknoten gelangen die Telegramme zu den jeweiligen Protokollbausteinen, die das Telegrammprotokoll abarbeiten und in denen das Zeitschlitz-Zugriffsverfahren realisiert wird. Wenn der Protokollbausteinen unabhängig von einem Mikroprozessor der Slave-Applikation (dem eigentlichen Leistungsteil) ist, können mittels Kontroll-Bits des Telegrammrahmens bestimmte Applikationsereignisse im Slave ausgelöst werden, ohne dessen Mikroprozessor und eine entsprechende Software zu benötigen. Dies entspricht einem zweiten Auslösekanal, wie er für bestimmte sicherheitsgerichtete Anwendungen (z. B. Not-Aus etc.) gefordert ist.

In verteilten Automatisierungssystemen, beispielsweise im Bereich Antriebstechnik, müssen bestimmte Daten zu bestimmten Zeiten (d.h. echtzeitkritische Daten) bei den dafür bestimmten Teilnehmern eintreffen und von den Empfängern verarbeitet werden. Gemäss JEC 61491, EN61491 SERCOS interface - Technische Kurzbeschreibung (http:/ / www.sercos.de/deutsch/index deutsch.htm) kann ein erfolgreicher echtzeitkritischer Datenverkehr der genannten Art in verteilten Automatisierungssystemen gewährleistet werden. Weiterhin sind aus der Automatisierungstechnik synchrone, getaktete Kommunikationssysteme mit Äquidistanz-Eigenschaften bekannt, wie dies beispielsweise in der DE 101 40 861 A1 für ein System und ein Verfahren zur Übertragung von Daten zwischen Datennetzen beschrieben ist. Im Einzelnen weist das erste Datennetz erste Mittel zur Übertragung von Daten in wenigstens einem ersten Übertragungszyklus auf, wobei der erste Übertragungszyklus in einen ersten Bereich zur Übertragung von echtzeitkritischen Daten und einen zweiten Bereich zur Übertragung von nichtechtzeitkritischen Daten unterteilt ist. In dem zweiten Datennetz sind zweite Mittel zur Übertragung von Daten in wenigstens einen zweiten Übertragungszyklus vorgesehen, wobei der zweite Übertragungszyklus in einen dritten Bereich zur Übertragung von echtzeitkritischen Daten und in einen vierten Bereich zur Übertragung von nichtechtzeitkritischen Daten unterteilt ist. Zur Kopplung der Datennetze mit denselben oder unterschiedlichen Kommunikationsprotokollen, z. B. Ethernet-Datennetze, insbesondere isochrone Echtzeitethernet-Kommunikationssysteme, mit PROFIBUS-Datennetzen oder isochrone Echtzeitethernet-Datennetze mit SERCOS-Datennetzen und/oder FIREWIRE-Datennetzen oder PROFIBUS-Datennetze und/oder FIREWIRE-Datennetze mit SERCOS-Datennetze ist schließlich eine Koppeleinheit (Router) zur Übertragung von echtzeitkritischen Daten des ersten Bereichs in den dritten Bereich vorgesehen. Die Möglichkeit echtzeitkritische Daten von einem Datennetz in das andere übertragen zu können, wird dazu benutzt, Zyklus-Synchronisationstelegramme von einen Taktschläger des einen Datennetzes in das andere Datennetz zu übertragen, um auch in dem anderen Datennetz lokale Relativuhren mit Hilfe der Zyklus-Synchronisationstelegrammen zu synchronisieren. Hierzu haben die unterschiedlichen Datennetze jeweils eigene Taktschläger. Aufgrund der datennetzübergreifenden Taktsynchronisation kann in jedem der Teilnehmer der Datennetze eine Relativuhr realisiert werden, die eine systemweit eindeutige Uhrzeit darstellt. Basierend auf diesem Grundmechanismus können hiermit Ereignisse in beiden Kommunikationssystemen mit einem einheitlichen Zeitverständnis erfasst werden bzw. zeitbezogene Schaltereignisse im eigenen oder dem anderen Datennetz ausgelöst werden. Die Genauigkeit der Relativuhr entspricht mindestens der Genauigkeit eines Übertragungszyklus. Der Router kann dabei als diskretes Gerät ausgebildet sein oder er kann auch integraler Bestandteil eines Teilnehmers eines der Datennetze sein, wobei auch das Routing von azyklischer bedarfsgesteuerter Kommunikation, z.B. Remote Procedure Calls (RPC), zwischen den Datennetzen möglich ist und die entsprechende Kommunikation dabei mit proprietären und/oder offenen Protokollen erfolgen kann.

Automatisierungskomponenten (z. B. Steuerungen, Antriebe) verfügen im Allgemeinen über eine Schnittstelle zu einem zyklisch getakteten Kommunikationssystem. Eine Ablaufebene der Automatisierungskomponente (Fast-cycle, z.B. Lageregelung in einer Steuerung, Drehzahl-, Drehmomentregelung eines Antriebs) ist auf den Kommunikationszyklus synchronisiert, wodurch der Kommunikationstakt festgelegt wird. Andere langsamer ablaufende Algorithmen (Slow-cycle, z.B. Temperaturregelungen) der Automatisierungskomponente können ebenfalls nur über diesen Kommunikationstakt mit anderen Komponenten (z. B. Binärschalter für Lüfter, Pumpen) kommunizieren, obwohl ein langsamerer Zyklus ausreichend wäre. Durch Verwendung nur eines Kommunikationstaktes zur Übertragung von allen Informationen im System entstehen hohe Anforderungen an die Bandbreite der Übertragungsstrecke. Demzufolge nutzen die Systemkomponenten zur Kommunikation für jede Prozess- bzw. Automatisierungsebene nur ein Kommunikationssystem bzw. einen Kommunikationszyklus (Fast-cycle) in dessen Takt alle relevanten Informationen übertragen werden. Daten, die nur im Slow-cycle benötigt werden, können z. B. über zusätzliche Protokolle gestaffelt übertragen werden, um die Anforderungen an die Bandbreite zu begrenzen. Aus der DE 101 47 421 A1 ein Verfahren zur Regelung eines ersten Teilnehmers in einem schaltbaren Datennetz von einem zweiten Teilnehmer in dem schaltbaren Datennetz bekannt, bei dem der Regelkreis über das schaltbare Datennetz geschlossen wird. Hierzu erfolgt die Kommunikation zwischen Teilnehmern des schaltbaren Datennetzes über eine oder mehrere Punkt-zu-Punkt Verbindungen in zueinander synchronen Übertragungszyklen. Für die Kommunikation von Ist- und Soll-Werten bzw. von Stellgrößen über das Datennetz wird dabei der echtzeitfähige Bereich der Übertragungszyklen genutzt und die Kommunikation der für die Regelung erforderlichen Datentelegramme erfolgt innerhalb determinierter Zeitfenster. Weiterhin kann auch ein Leitwert über das schaltbare Datennetz übertragen werden, welcher von einem der Teilnehmer des Datennetzes für einen oder mehrere Teilnehmer des Datennetzes generiert wird. Hierbei kann es sich beispielsweise um die Erfassung eines Ist-Werts einer Achse, das heißt, einer so genannten Master-Achse, einer Anlage handeln. Aufgrund dieses Ist-Werts wird von dem betreffenden Teilnehmer ein Leitwert generiert, der für die Steuerung von so genannten Slave-Achsen verwendet wird. Die Funktionalität einer solchen Steuerung, beispielsweise eine speicherprogrammierbare Steuerung, eine Motion-Control-Steuerung oder eine numerische Steuerung, kann auch in einem Antrieb integriert sein. Neben der Kopplung einer Eingabe/Ausgabe-Station an eine Steuereinheit kann auch eine Relativuhr in einem der Teilnehmer generiert werden. Die Relativuhr wird von einer Master-Uhr generiert und zyklisch im Netzwerk verteilt und sorgt dafür, dass alle im Datennetzwerk beteiligten Teilnehmer über eine gleich eingestellte Uhrzeit verfügen. Die Zeitbasis für die Relativuhr ist dabei durch die synchronen Übertragungszyklen und/oder die Unterteilung der Übertragungszyklen in Zeitschlitze gegeben. Basierend auf dieser gemeinsamen Uhrzeit können Ereignisse mit Uhrzeitstempeln erfasst werden (z.B. Flankenerkennung von digitalen I/O's) bzw. Schaltvorgänge (z. B. Schalten von digitalen/analogen Ausgängen) mit einem entsprechenden Zeitstempel versehen werden und die Schaltausgabe basierend auf dieser gemeinsamen Relativzeit ausgeführt werden. Innerhalb der Echtzeitkommunikation gibt es potentiell mehrere Kommunikationszyklen, um unterschiedliche "quality of Services" zu realisieren, wie beispielsweise: 1ms-Zyklus für Gleichlaufverbindung (Leitwert über Bus), Drehzahlsoll-/Lagesoll-/I/O-Schnittstelle für zeitkritische Achsen, Fast I/O-Ankopplung oder 4ms-Zyklus für zeitunkritische Achsen (Frequenzumrichter, einfache Positionierachsen), Applikationsdaten z.B.: Not-Aus-Steuerung, Verteiltes Schieberegister (Produktverfolgung), Ansteuerung (z. B. Betriebsarten) in verteilten Systemen, Vorgabe von neuen Bohraufträgen (z. B. Bohrtiefe) bei Bohrautomaten oder asynchroner und/oder event-gesteuerter Zyklus für Projektierungs-Daten und -Ereignisse oder Daten und Routinen für Fehlerhandling und Diagnose.

Um ein Verfahren zum Aufbau eines auf Ethernet basierenden Kommunikationssystems für die Industrieautomation bereitzustellen, das ein im wesentlichen determinierbares Kommunikationsverhalten, Reaktionszeiten im unteren Millisekundenbereich und niedrige Kosten der Kommunikationsknoten aufweist, ist schließlich aus der DE 100 55 066 A1 ein Verfahren zum multidirektionalen Austausch von Informationen zwischen Teilnehmern (z.B. Automatisierungsgeräte) bekannt, bei dem je nach Größe des gesendeten Ethernet-Datenpaketes (Telegramm), dieses in mehrere kleinere Pakete (Kurztelegramme) zerlegt und diesen jeweils mindestens eine Steuerinformation hinzugefügt wird, die kleineren Pakete in mehreren Zyklen an ihr Ziel übertragen werden und gegebenenfalls dort mittels der Steuerinformationen zum ursprünglichen Ethernet-Datenpaket wieder zusammengesetzt werden. Dabei werden alle Telegramme, deren Länge größer als die der Kurztelegramme ist, zerlegt und alle Kurztelegramme besitzen die gleiche fest eingestellte Größe. Der Steuerinformation sind die Quelle und das Ziel des Kurztelegramms, ob es sich um ein zerlegtes oder unzerlegtes Telegramm handelt, in wieviele Kurztelegramme zerlegt wurde und die laufende Nummer des Kurztelegramms entnehmbar. Zum multidirektionalen Austausch von Informationen zwischen Teilnehmern (z. B. Automatisierungsgeräte), wobei einem Industrial Domain Switch (IDS) ein Teilnehmer zuweisbar ist, welcher mit dem IDS über einen Ethernet-Anschluss verbunden ist, sind die IDS über einen ethernetkonformen Anschluss als Netzwerk aufgebaut und jeder IDS erhält nach einem vorgegebenen, zyklischen Regelwerk zeitlich determiniert ein Senderecht. Eine Senderechtsvergabe wird beim Start des Systems bzw. Neustart (Power On oder Reset) über eine Managementfunktion mittels Managementtelegramme, wobei die IDS erkennen, dass es sich um Managementtelegramme handelt, zwischen den IDS ausgehandelt. Die gesamte Steuerlogik des IDS kann in einem hochintegrierten elektronischen Baustein integriert werden.

Wie die vorstehende Würdigung des Standes der Technik aufzeigt, werden in der Automatisierungstechnik zur Kommunikation zwischen den einzelnen Geräten verschiedene Schnittstellen mit ihren physikalischen Eigenschaften und Übertragungsprotokolle definiert und in internationale Normen eingebracht oder etablieren sich als Industriestandards. Diese Systeme werden allgemein als Feldbussystem bezeichnet, wobei auch die Ethernet-basierten Technologien dazu zu zählen sind. Die Schnittstellen sind in Form von dedizierten Kommunikations-Controllern, zum Teil mit CPU als integrierte Schaltkreise (Kommunikations-Prozessor) aufgebaut, siehe beispielsweise DE 198 31 405 (ASIC: ASPC2), DE 299 07 909 (ASIC: SPC3), DE 199 28 517 C2 (ASIC: SUPI). Ebenso wird das gesamte Interface oft als auswechselbares Modul aufgebaut, bestehend aus Steckverbinder, physikalischem Interface, dedizierter Kommunikations-Controller, Mikroprozessor mit Speicher und Übergabelogik zur CPU des Automatisierungsgeräts in der Regel ein Dual-port Memory. Dieses Modul realisiert genau ein spezielles Übertragungsprotokoll und muss in der Gesamtheit darauf speziell entwickelt werden. In der Regel enthält der Kommunikations-Prozessor jeweils nur einen speziellen Kommunikations-Controller für ein spezielles Feldbussystem, wobei es mittlerweile auch Schaltkreise gibt, die mehrere dieser dedizierten Kommunikations-Controller enthalten, wie dies beispielsweise in der US-Patentanmeldung 09/780,979 für einen Kommunikations-Controller nach dem CAN-Standard und einen Kommunikations-Controller nach dem Ethernet -Standard beschrieben ist. Dabei sind in der Regel spezielle Hard- und Softwarekomponenenten mit einer Reihe von teueren, für die Kommunikation speziell ausgelegten Komponenten, wie HUB und Leitungstreiber, Ethernet-Controller, Media Interpent Interface für die Verbindung zu einem anderen Netz (öffentliches Datennetz, anderes LAN oder einem Hostsystem), Feldbus-Schnittstellen bzw. Sensorbus-Schnittstelle, insbesondere Serial Peripheral Interface mit Master- bzw. Slave-Protokollchips, sowie die Umsetzung entsprechender Netzwerk-Zugangsprotokolle, z.B. CSMA/CD (Carrier Sense Multiple Access/Collision Detection), Token-Passing (Bitmuster als Berechtigungsmarke) oder TCP/IP (Transmission Control Protocol/Internet Protocol) in für den Feldbus spezifizierte Protokolle erforderlich. Wenig Beachtung findet jedoch die Entwicklung eines solchen Schaltkreises oder einer Kommunikationsschnittstelle unabhängig von einem speziellen Feldbussystem, um darauf basierend eine individuelle und komfortable Anpassung der Kommunikationsfunktionen zu ermöglichen. In der Regel realisiert der Kommunikations-Controller jeweils nur ein spezielles Feldbussystem zur Kommunikation der üblichen SPS-Funktionsbausteinen, wobei beispielsweise Antriebe über schnelle, deterministische und jitterfreie Kommunikationsverbindungen miteinander synchronisiert werden. Dies erfolgt über das Detektieren eines bestimmten Date oder Ereignisses im Kommunikations-Controller, der die nachgeschaltete CPU über einen Interrupt veranlasst, die synchronen Antriebsfunktionen, wie das Messen der Position oder das Ausgeben der Stellgrößen, auszuführen. Dieses Verfahren hat den Nachteil, dass in die Genauigkeit der Synchronisation die Interruptlatenz-Zeiten der CPU, besonders bei Verwendung von Betriebssystemen, welche die Interrupte für bestimmte Zeiten sperren, entscheidend eingehen. Deshalb fehlen in der Praxis kostengünstige Verfahren und Kommunikationsschnittstellen für ein in Echtzeit betreibbares Automatisierungssystem, welches eine individuelle, insbesondere automatisch anpassbare, interaktive Kommunikation sicherstellt oder eine einfache Austauschbarkeit ermöglicht bzw. Funktionsbausteine für ein in Echtzeit betreibbares Automatisierungssystem, welches auch ohne zusätzliche Hardware-Funktionsmodule und ohne aufwendige Schnittstellenanpassungen schnell und wirtschaftlich anspruchsvolle Automatisierungslösungen aufbauen.

In diesem Zusammenhang ist aus der DE 100 53 525 A1, ein Verfahren und ein System zur Synchronisation von Teilnehmern einer Kommunikationsverbindung bekannt, welches - vereinfacht gesprochen - ein Verfahren und System zur Synchronisation wenigstens zweier Teilnehmer, welche sich auf Zuruf auf eine gemeinsame Uhrzeit einigen, betrifft. Hierzu enthält jeder zu synchronisierende Teilnehmer einen eigenen Zeitgeber und die Teilnehmer stehen über wenigstens eine Kommunikationsverbindung in Verbindung, wobei wenigstens ein Ereignis zur Synchronisation auf der Kommunikationsverbindung übermittelt wird. Der erste Teilnehmer ermittelt dann abhängig von dem Ereignis eine erste globale Zeit G1, gleichfalls ermittelt ein zweiter Teilnehmer abhängig von dem Ereignis eine zweite globale Zeit G2, wobei die erste, zweite, .. globale Zeit auf der Kommunikationsverbindung durch die entsprechenden Teilnehmer übermittelt werden usw. Danach ermittelt jeder zu synchronisierende Teilnehmer aus den empfangenen globalen Zeiten G1, G2 (d.h. der ersten, zweiten, .. globalen Zeit) eine allgemeine globale Zeit G und synchronisiert den enthaltenen Zeitgeber mit der allgemeinen globalen Zeit G. Zu Kompensation von Alterungs- und Temperatureinflüsse und sonstige derartige Fehler- bzw. Abweichungsursachen wird zusätzlich der Verlauf der ersten und/oder wenigstens zweiten globalen Zeit G1, G2 zwischen zwei Ereignissen und der Verlauf der allgemeinen globalen Zeit G im ersten und/oder wenigstens zweiten Teilnehmer einander angenähert, insbesondere einander angeglichen. Die Ermittlung einer allgemeinen globalen Zeit G kann beispielsweise durch Mittelwertbildung mit oder ohne Streichung von Extremwerten oder Ähnlichem geschehen. Wichtig ist, dass alle Controller dieses Ereignis d.h. Synchronisationspuls gleichzeitig wahrnehmen. Die Qualität der "Gleichzeitigkeit" beeinflusst direkt die Qualität der resultierenden Synchronisation. Die Gleichzeitigkeit kann auch rechnerisch hergestellt werden, indem Laufzeiten, Wandlungszeiten oder ähnliche bekannte Einflussgrößen berücksichtigt werden. Wie oft das Ereignis/ Synchronisationspuls kommt, hängt insbesondere von der speziellen Applikation ab und ist frei wählbar bzw. aus dem System entnehmbar. Falls der Synchronisationspuls (z. B. bei einer periodischen Sendung) einmal nicht kommt, ist ein späterer Zeitpunkt problemlos verwendbar, z. B. ein Senden in der nächsten Periode beeinflusst die Synchronisierungsqualität mit einem Faktor 2 (z. B. von 200ns nach 400ns). Im eingeschwungenen Zustand kann der Offset sich nur noch um die Drift der eigenen Zeit zwischen zwei Synchronisationspulsen verschieben. Weder ist beim Gegenstand der DE 100 53 525 A1 die Zusammenarbeit zwischen einen Kommunikations-Controller mit frei programmierbaren Kommunikations-ALU und einer diesem nachgeschalteten Steuereinrichtung noch die Vermeidung von Interruptlatenzzeiten einer (nachgeschalteten) Steuereinrichtung erwähnt.

Weiterhin ist aus der DE 102 58 469 A1 ein Verfahren und eine Vorrichtung zur Datenübermittlung in einem verteilten System bekannt, wobei das verteilte System mindestens zwei Einheiten umfasst. Um ein Verfahren und eine Vorrichtung zu schaffen, mittels derer die Buslast in einem verteilten System reduziert wird oder bei gleich bleibender Buslast die Erfassungs- bzw. Messrate erhöht wird, umfasst die Vorrichtung Controller, die jeweils einer Einheit des verteilten Systems zugeordnet sind, ein Bus-System, das die Controller miteinander verbindet, eine Auswerteeinrichtung, die ebenfalls mit dem Bus-System verbunden ist und mindestens ein Mittel, welches Synchronisationsimpulse erzeugt, wobei mittels der Controller Werte mindestens einer Zustandsgröße der zugehörigen Einheiten erfasst werden, wobei erfasste Werte und/oder Werte einer daraus abgeleiteten Größe als digitale Sequenzen zeitsynchron auf den Bus gesendet werden, wobei die Controller einen Mikroprozessor aufweisen, mittels dem ein Arbitrierverfahren bezüglich der gesendeten Sequenzen durchführt wird. Im Unterschied zu bekannten Arbitrierverfahren, wie beispielsweise beim CAN, wird das Arbitrierverfahren nicht bezüglich eines Identifier durchgeführt, sondern in Bezug auf erfasste Messwerte oder Werte einer daraus abgeleiteten Größe, die in digitalen Sequenzen dargestellt sind. Daraus ergibt sich der Vorteil, dass alle Controller gleichzeitig eine digitale Sequenz auf einen bekannten Bus senden können, wenn es beispielsweise erforderlich ist einen Minimalwert und/oder Maximalwert einer Zustandsgröße aller Einheiten zu bestimmen. Dabei dauert der Ermittlungsvorgang für einen Maximalwert oder einen Minimalwert nur so lange, wie das Übermitteln einer digitalen Sequenz eines Controllers. Es ist auch keine weitere Rechenleistung und Rechenzeit der Auswerteeinrichtung erforderlich, weil ein Maximalwert oder ein Minimalwert sofort nach dem Arbitrieren vorliegt. Dabei kann eine Sequenz, die vollständig an eine Auswerteeinrichtung übermittelt wird und einen Maximalwert oder einen Minimalwert darstellt, einem oder mehreren Controllern zugehörig sein.

Dokument "Clustered-architecture motion control system utilizing IEEE 1394b communication network", XP010820243, stellt ein System für synchronisierte Steuerung mehrerer Maschinen durch ein Kommunikationsnetzwerk dar, das auf dem IEEE 1394b High-Speed-Serial-Bus-Standard basiert. In ausgewählten Bereichen werden die Steueralgorithmen zentralisiert. In anderen Bereichen werden sie verteilt, um auf autonomen Steuereinheiten zu laufen, wobei die Steuereinheiten synchronisiert werden und die Ereignissen von ersten Steuereinheiten auf anderen Steuereinheiten behandelt werden.

Schließlich ist der US 5 988 846 A aus Verfahren zum Betrieb eines Antriebssystems und Vorrichtung zur Durchführung des Verfahrens auf dem technischen Gebiet der Werkzeugmaschinen und Rotationsdruckmaschinen bekannt, wobei das Antriebssystems mindestens zwei Antriebsgruppen umfasst, wobei jede Antriebsgruppe eine Antriebssteuerung und mindestens einen Antrieb umfasst, ein Antrieb mindestens einen Motor und einen Antriebsregler umfasst und die Antriebsregler einer Antriebsgruppe über einen Antriebsbus untereinander und die Antriebssteuerungen mit übergeordneten Steuereinheiten (9) verbunden sind. Weiterhin sind die Antriebssteuerungen der Antriebsgruppen über ein eigenes Antriebsdatennetz untereinander verbunden und die Antriebsregler einer Antriebsgruppe werden mittels eines lokalen, insbesondere in der Antriebssteuerung erzeugten, über den Antriebsbus übertragenen Synchronisationstaktes synchronisiert. Die lokalen Synchronisationstakte werden über das Antriebsdatennetz an einen globalen Synchronisationstakt angeglichen und für die Antriebsgruppen werden bestimmte Sollwertdaten synchron nach Maßgabe des globalen Synchronisationstaktes zwischen den Antriebssteuerungen der Antriebsgruppen über das Antriebsdatennetz übertragen. Die über das Antriebsdatennetz übertragenen Sollwertdaten enthalten Sollwerte von Leitachsen und/oder Folgeachsen und die Sollwerte von Leitachsen und Folgeachsen werden zeitgleich berechnet und über das Antriebsdatennetz übertragen. Insbesondere sind mehrere Antriebsteuerungen zur Bildung des globalen Synchronisationstaktes ausgerüstet und mittels einer Vorrangsliste wird bestimmt: welche Antriebssteuerung zur Vorgabe des globalen Synchronisationstaktes berechtigt ist. Die Vorrangsliste wird zyklisch durchlauten, so dass der globale Synchronisationstakt nacheinander für eine bestimmte Zeitspanne von verschiedenen Antriebssteuerungen erzeugt wird.

Besonders bedeutsam ist dies, weil die Telekommunikations- und Computerindustrie, insbesondere auf dem Gebiet der Automatisierungs- und Antriebstechnik, als äußerst fortschrittliche, entwicklungsfreudige Industrien anzusehen sind, die schnell Verbesserungen und Vereinfachungen aufgreifen und in die Tat umsetzen.

Der Erfindung liegt die Aufgabe zugrunde, ein Verfahren und eine Vorrichtung zur Synchronisation von untereinander über einen seriellen Datenbus kommunizierenden Busteilnehmern eines offenen Automatisierungssystems derart auszugestalten, dass eine automatische und hochgenaue Synchronisation ermöglicht wird.

Diese Aufgabe wird bei einem Verfahren gemäß dem Anspruch 1 gelöst. Hier wird das folgende Verfahren beschrieben: ein Verfahren zur Synchronisation von untereinander über einen seriellen Datenbus kommunizierenden Busteilnehmern eines Automatisierungssystems mit verteilter Steuerung, welche mindestens einen Kommunikations-Controller aufweisen, der über drei frei programmierbare Kommunikations-ALU, die nämlich die erste Kommunikations-ALU, die zweite Kommunikations-ALU und die dritte Kommunikations-ALU genannt werden, mit einer nachgeschalteten Steuereinrichtung zusammenarbeitet, bei dem:der Kommunikations-Controller das Auftreten eines bestimmten Datums oder Ereignisses detektiert,
- die Kommunikations-ALU die synchronen Steuerungsfunktionen ausführen, indem
- die erste Kommunikations-ALU entsprechend der Übertragungsrate den empfangenen Bit- bzw. Nibble- seriellen Datenstrom dekodiert und in eine parallele Darstellung konvertiert,
- die zweite Kommunikations-ALU Daten aus einer parallelen Darstellung in Bit- bzw. Nibble-seriellen Datenstrom kodiert und mit der richtigen Übertragungsrate auf die Leitung gibt und
- die dritte Kommunikations-ALU den Sende- und Empfangsverlauf eines zusammengehörigen Datenpakets steuert, und
- zwischen den Synchronisationszeitpunkten die Mess- und Stellwerte zwischen Kommunikations-Controller und Steuereinrichtung ausgetauscht werden,
und dass die frei programmierbaren Kommunikations-ALUs völlig deterministisch und ohne die nachgeschaltete Steuereinrichtung die synchronen Steuerungsfunktionen selbständig ausführen und der Kommunikations-Controller, die drei Kommunikations-ALU und die Steuereinrichtung daran angepasst sind, dass die Interruptlatenzzeiten der nachgeschalteten Steuereinrichtung nicht in die Synchronisation eingehen.

Das erfindungsgemäße Verfahren gemäß Patentanspruch 1 ermöglicht auf einfache Art und Weise unter Beibehaltung des modularen Aufbaus die Kommunikation über einen taktsynchronen und äquidistanten Bus zur Steuerung hoch präziser Abläufe bei kürzesten Zykluszeiten. Eine Steuerungs- und Kommunikationslösung beruht auf einen "quasi dezidierten" Kommunikations-Controller, welcher aus einer bzw. mehreren frei programmierbare Kommunikations-ALUs (Arithmetik and Logic Unit) aufgebaut ist, die einen auf die Kommunikationsaufgaben optimierten Befehlssatz und Hardwarearchitektur besitzt. Die Erfindung hat folgende Vorteile:
- Die Entwicklung, Produktion und Vertrieb eines solchen Schaltkreises kann unabhängig von einem speziellen Feldbussystem erfolgen.
- Erweiterungen innerhalb der Feldbusspezifikation oder Implementierungen komplett neuer Feldbussysteme können per Softwareupdate erfolgen und benötigen keinen neuen Schaltkreis.
- Besonders bei zwei oder mehreren Kommunikationsschnittstellen innerhalb eines Schaltkreises werden die jeweiligen Feldbussysteme durch Laden der Software festgelegt und sind damit völlig flexibel auswählbar.
- Die erfindungsgemäße kombinierte Steuerungs- und Kommunikationslösung ist trotz Erfüllung echtzeitkritischer Anforderung mit geringem Kostenaufwand realisierbar und bietet - infolge einer durchgängigen Programmierung und gemeinsamen Datenhaltung (alle Bezeichner sind systemweit automatisch bekannt und eindeutig) - noch genügend Freiraum für zukünftige Ergänzungen, beispielsweise Abläufe zu parallelisieren, Unterroutinen einzufügen, analoge und digitale Ein-/Ausgänge nach Anforderung zu betreiben und Achsen wahlweise einzeln oder in unterschiedlichsten Abhängigkeiten zueinander zu verfahren.

Weiterhin wird diese Aufgabe durch ein Verfahren gemäß Patentanspruch 2 gelöst. Hier wird das folgende Verfahren beschrieben: ein Verfahren zur Synchronisation von untereinander über einen seriellen Datenbus kommunizierenden Busteilnehmern eines Automatisierungssystems mit verteilter Steuerung, welche mindestens einen Kommunikations-Controller aufweisen, der über drei frei programmierbare Kommunikations-ALU, die nämlich die erste Kommunikations-ALU, die zweite Kommunikations-ALU und die dritte Kommunikations-ALU genannt werden, mit einer nachgeschalteten Steuereinrichtung zusammenarbeitet, bei dem:
- die erste Kommunikations-ALU entsprechend der Übertragungsrate den empfangenen Bit- bzw. Nibble- seriellen Datenstrom dekodiert und in eine parallele Darstellung konvertiert,
- die zweite Kommunikations-ALU Daten aus einer parallelen Darstellung in Bit- bzw. Nibble-seriellen Datenstrom kodiert und mit der richtigen Übertragungsrate auf die Leitung gibt,
- die dritte Kommunikations-ALU den Sende- und Empfangsverlauf eines zusammengehörigen Datenpakets steuert,
- zum Startzeitpunkt von zyklisch ablaufenden Steuerungsfunktionen die synchronisierte lokale Zeit in einem Latch abspeichert wird,
- durch Differenzbildung mit der gespeicherten Zeit im letzten Startpunkt die Zykluszeit auf Basis der lokalen Zeit einer lokalen Uhr gemessen wird und
- durch Vergrößern oder Verkleinern der aktuellen Zykluszeit mittels Kommunikations-Controller, diese in Bezug auf die lokale Zeit konstant und in einer festen Phasenbeziehung gehalten wird,
und dass der gesamte Zyklus sowohl in seiner Zykluszeit als auch in seiner Phasenlage auf die lokale Zeit synchronisiert ist und der Kommunikations-Controller, die drei Kommunikations-ALU und die Steuereinrichtung daran angepasst sind, dass die Interruptlatenzzeiten der nachgeschalteten Steuereinrichtung nicht in die Synchronisation eingehen.

Bei dem Verfahren gemäß den Ansprüchen 1 und 2 gehen die Interruptlatenzzeiten der nachgeschalteten Steuereinrichtung nicht in die Synchronisation der Steuerungsfunktionen ein.

Schließlich wird diese Aufgabe bei einer Vorrichtung gemäß dem Anspruch 10 gelöst. Hier wird eine Vorrichtung beschrieben: eine Vorrichtung zur Synchronisation von untereinander über einen seriellen Datenbus kommunizierenden Busteilnehmern eines Automatisierungssystems mit verteilter Steuerung, wobei die Vorrichtung den Datenbus und die Busteilnehmer aufweist und mit:
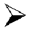 einem Kommunikations-Prozessor mit mindestens einem Kommunikations-Controller, welcher drei frei programmierbare Kommunikations-ALU, die nämlich die erste Kommunikations-ALU, die zweite Kommunikations-ALU und die dritte Kommunikations-ALU genannt werden, aufweist,
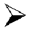 der ersten Kommunikations-ALU entsprechend der Übertragungsrate den empfangenen Bit- bzw. Nibble- seriellen Datenstrom dekodiert und in eine parallele Darstellung konvertiert,
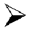 der zweiten Kommunikations-ALU Daten aus einer parallelen Darstellung in Bit- bzw. Nibble-seriellen Datenstrom kodiert und mit der richtigen Übertragungsrate auf die Leitung gibt
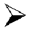 und der dritten Kommunikations-ALU den Sende- und Empfangsverlauf eines zusammengehörigen Datenpakets steuert,
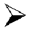 einer dem Kommunikations-Controller nachgeschalteten Steuereinrichtung zur Steuerung mindestens eines Antriebs, wobei der Kommunikations-Controller das Auftreten eines bestimmten Datums oder Ereignisses detektiert und
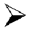 mindestens einen Logikfunktionsblock des Kommunikations-Prozessors mit Mitteln zur Messung und Speicherung von Zeiten in der Kommunikations-ALU,
und dass mittels des Kommunikations-Controllers eine direkte Synchronisation der Steuerungsfunktionen für den Antrieb ohne die nachgeschaltete Steuereinrichtung oder die Synchronisation nach Maßgabe einer gespeicherten lokalen Zeit mit jedem Start einer Steuerungsfunktion erfolgt und der Kommunikations-Controller, die drei Kommunikations-ALU und die Steuereinrichtung daran angepasst sind, dass die Interruptlatenzzeiten der nach geschalteten Steuereinrichtung nicht in die Synchronisation eingehen.

Somit können zwei leistungsstarke Verfahren genutzt werden, ohne dass damit eine grundlegende Hardwareanpassung erforderlich ist.

Der Kommunikations-Prozessor kann mehrere frei programmierbare Kommunikations-Controller enthalten, wodurch unterschiedliche Kombinationen an Kommunikations-Standards realisieren werden.

Diese Möglichkeit weist den Vorteil auf, dass man im Vergleich zum Stand der Technik für jeden Kanal den im Austauschmodul benötigten Mikroprozessor und die zugehörige Infrastruktur wie Speicher und Dual-port Memory einspart. Dabei kann der Kommunikations-Prozessor sowohl die Applikation als auch das Übertragungsprotokoll abarbeiten, da heutige Mikroprozessoren so leistungsfähig sind, dass sie sowohl die Applikation als auch das Übertragungsprotokoll abarbeiten können. Damit erspart man sich auf vorteilhafte Weise einen zweiten Mikroprozessor und die zugehörige Infrastruktur wie Speicher und Dual-port Memory im Austauschmodul.

Die abhängigen Ansprüche definieren entsprechende Ausführungsbeispiele.

Weitere Vorteile und Einzelheiten lassen sich der nachfolgenden Beschreibung von bevorzugten Ausführungsformen der Erfindung unter Bezugnahme auf die Zeichnung entnehmen. In der Zeichnung zeigt:
- **FIG. 1**: das Blockschaltbild einer Ausführungsform mit direkter Synchronisation der Antriebsfunktionen,
- **FIG. 2**: das Blockschaltbild einer zweiten Ausführungsform mit Speicherung der Systemzeit bei jedem Start einer Antriebsfunktion,
- **FIG. 3**: für die Ausführungsform nach **FIG. 2** ein Zeitdiagramm mit Synchronisation des PWM-Zyklus auf die lokale Systemzeit und
- **FIG. 4**: ein Beispiel für einen Befehlscode.

In der Automatisierungstechnik sind seit Jahren verschiedene Kommunikationssysteme mit standardisierten Kommunikationsdiensten und Protokollen, mit denen man zwischen heterogenen und homogenen Netzwerken kommunizieren kann, im Einsatz. In der untersten Ebene sind beispielsweise einfache Sensor-Aktuator-Bussysteme oder Rückwandbussysteme (z.B. auf handelsüblichen Norm-Tragschienen anbringbare modulare Ein-/Ausgabe-Geräte), in der mittleren Ebene "eingebettete" Netzwerke zur Steuerung der Maschinen (welche programmierbare Steuerungen, komplexe elektrische und hydraulische Antriebsgeräte, Ein-/Ausgabe-Geräte, Datenerfassungsgeräte oder Mensch/Maschine-Schnittstellen verbinden) und in der obersten Ebene die Netzwerke zur Fabrikautomation angeordnet. Bei der erfindungsgemäßen Lösung liegt in Hinblick auf die Kommunikationsbeziehungen ein einheitliches logisches Netzwerk vor so dass eine scharfe Trennlinie zwischen der Technik in herkömmlichen Telekommunikationsnetzen, welche nachfolgend beschrieben wird, und (Computer)-Datennetzen nicht mehr gezogen werden kann.

In der Telekommunikationstechnik erfolgt die Übermittelung kontinuierlicher Datenströme, z.B. Sprach- oder Videokommunikation, in der Regel über paketvermittelnde Kommunikationsnetze, wie z.B. LANs (Local Area Networks), MANs (Metropolitan Area Networks) oder WANs (Wide Area Networks). Zunehmend wird auch die ADSL-Technik (Asymmetric Digital Subscriber Line, asymmetrisches DSL-Datenübertragungsverfahren) genutzt. Neben der ADSL-Technik sind auch andere DSL-Techniken gebräuchlich, beispielsweise HDSL = High Data Rate Digital Subscriber Line; SDSL = Single Line Digital Subscriber Line; MDSL = Multirate Digital Subscriber Line; RADSL = Low Rate Adaptive Digital Subscriber Line und VDSL = Very High Rate Digital Subscriber Line, die jede für den Anwendungsfall optimiert sind und unter dem Oberbegriff xDSL-Übertragungstechnik zusammengefasst werden. Die Kommunikation erfolgt über Verbindungen ganz unterschiedlicher Bandbreite, d.h. beispielsweise 56 KBit Analoganschluss oder 64 KBit -ISDN oder DSL oder - soweit in einem LAN eingebunden - über 100 MBit Twisted Pair-Leitung, oder über Wähl-Verbindungen 2 MBit und besser, oder über Standleitungen X.25. Dementsprechend ist eine ganze Vielzahl von Schnittstelleneinrichtungen bekannt, beispielsweise
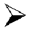 ISDN S₀ - Schnittstellen,
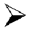 LAN-Interface FE (mit Programmspeicher) zum PCI-Bus,
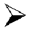 externes LAN-Interface LAN (mit Programmspeicher) als 10/100 Mbit/s Ethernet oder Token-Ring,
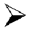 WAN-Schnittstellen WAN: X.21, V.35, G.703/704 bis 2 Mbit/s.

Dabei werden alle Interaktionen des Benutzers durch Events dem Dialog zwischen dem Benutzer und einem Dialogserver zugeführt, wobei in einer Dialogsteuerung DE die Session-ID als Zugangsberechtigung abgespeichert ist. Das Hardware-Konzept des Dialogservers muss auf die vielfältigen, gewachsenen Anschlussnormen im weltweiten Netzwerkbetrieb angepasst werden. Speziell angepasste LAN-Module mit wahlweise BNC-, AUI-, LWL-oder Twisted Pair-Anschlüssen verbinden den Dialogserver mit lokalen Token-Ring- und Ethernet-Netzwerken. Die Zugänge zu den Weitverkehrsnetzen (z.B. ISDN, X.25) und Standleitungen werden mit zum Teil mehrkanaligen WAN-Adaptern (S_{O}, U_{PO}, U_{KO}, X.21, V.24, V.35) geschaffen. Für die optimale Performance können aktive WAN-Adapter eingesetzt werden. Im ISDN-Bereich sind die Protokolle DSS1, 1TR6, N1-1, sowie Fetex 150 verfügbar.

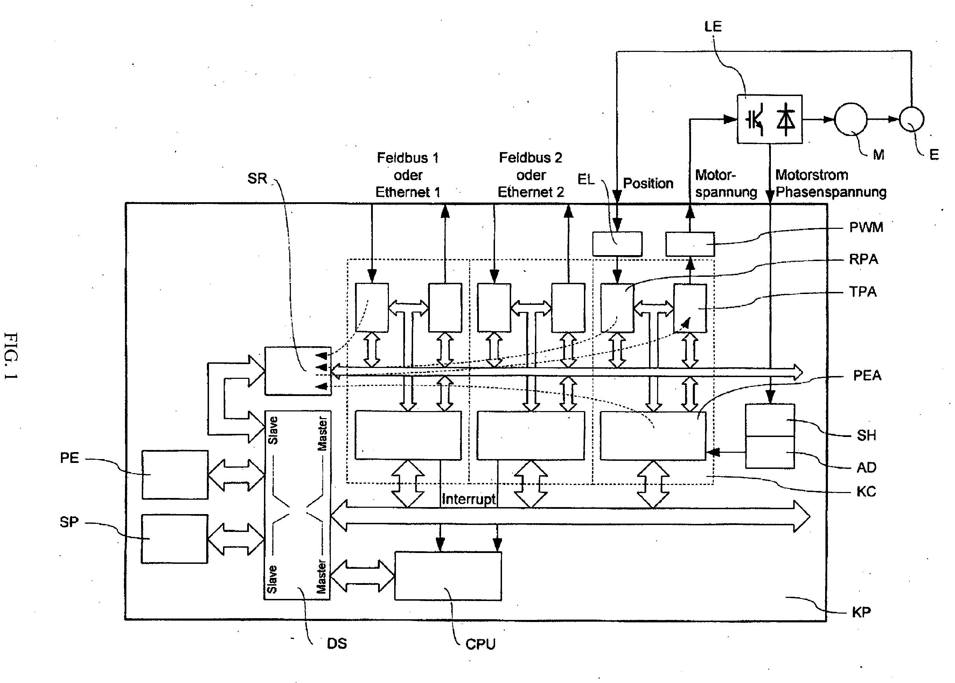

Bei dem in **FIG. 1** dargestellten Ausführungsbeispiel sind die Schnittstellen in Form eines frei programmierbaren Kommunikations-Controllers KC aufgebaut, der aus drei Kommunikations-ALUs besteht, nämlich:
- die Receive Processing ALU (RPA), welche die Aufgabe hat entsprechend der Übertragungsrate den empfangenen Bit- bzw. Nibble (halbes Byte) seriellen Datenstrom zu dekodieren und in eine parallele Darstellung (z.B. Byte, Wort oder Doppelwort) zu konvertieren,
- die Transmitt Processing ALU (TPA), welche die Aufgabe hat Daten aus einer parallelen Darstellung in Bit- bzw. Nibble seriellen Datenstrom zu kodieren und mit der richtigen Übertragungsrate auf die Leitung zu geben und
- die Protocol Excecution ALU (PEA), welche den Sende- und Empfangsverlauf eines zusammengehörigen Datenpakets steuert.

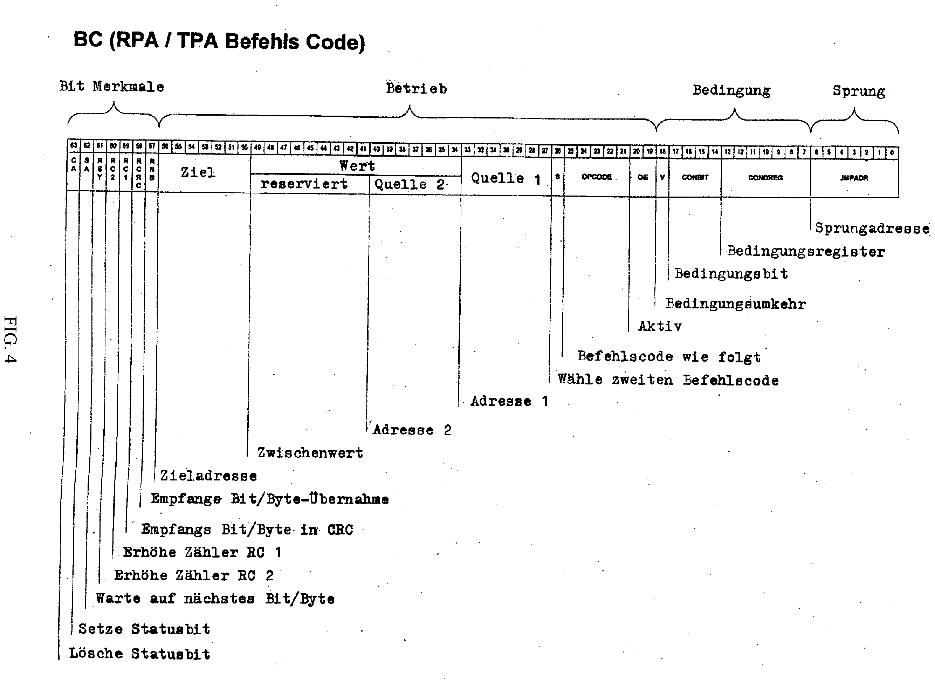

Um auch bei hohen Baudraten, z.B. 100 MHz Ethernet, die notwendigen Funktionen realisieren zu können, werden durch das Ausführungsbeispiel folgende Anforderungen erfüllt:
- Die Kommunikations-ALUs RPA und TPA können mehrere Befehle parallel ausführen. Dazu wird ein breiter Befehlscode BC (siehe **FIG. 4****)** benutzt, z.B. 64 Bit, in dem mehrere Befehle (siehe **FIG. 4****:** die sieben höchstwertigsten Bits, Operation, Cöndition, Jump) kodiert sind. Dies können z.B. logische Operationen, Programmsprünge, Setzen und Löschen von Bits in den Flags F, Inkrementieren und Dekrementieren von Zählern, Transfer von Daten und Bedienen von speziellen Funktionsregistern sein. Im Gegensatz zu herkömmlichen ALUs werden diese Befehle in einem Takt parallel ausgeführt. Dazu sind die zugehörigen Logikfunktionsblöcke in den Kommunikations-ALUs parallel angeordnet und können gleichzeitig den Befehlscode BC verarbeiten.
- Die Kommunikations-ALUs RPA und TPA verfügen über spezielle Funktionsregister, die ebenfalls parallel auf die zu verarbeitenden Daten wirken. Im einzelnen sind dies:
   - Schieberegister, in die die seriellen Daten automatisch rein- bzw. rausgeschoben werden und das Einfügen und Löschen von Bits an beliebigen Positionen ermöglichen,
   - Zähler, welche die seriellen Daten automatisch mitzählen und Vergleichsregister, welche bei Gleichheit ein Bit setzen,
   - Vergleichsregister, welche die serielle Daten auf bestimmte Bitmuster vergleichen und bei Gleichheit ein Bit in den Flags setzen,
   - CRC-Generatoren, welche aus den bitseriellen Daten selbständig CRC-Polynome berechnen,
- Die Kommunikations-ALU PEA überwacht im Gegensatz zu herkömmlichen ALUs eine Vielzahl von speziellen Ereignissen per Hardware parallel. Dies kann z.B.:
   - die Übergabe bestimmter Daten von der RPA bzw. zur TPA bzw. zur übergeordneten CPU,
   - das Ablaufen von Zeiten,
   - das Erreichen bestimmter Zählerstände oder
   - das Setzen bestimmter Zustandsbits sein.

Wenn eines oder eine bestimmte Kombination von Ereignissen eingetreten ist, reagiert die Kommunikations-ALU PEA innerhalb eines Systemtakts durch Abarbeitung eines dem Ereignis zugeordneten Stück Programmcodes.
- Die Kommunikations-ALU PEA ist ferner in der Lage innerhalb eines Systemtakts:
   - einen Date aus einem lokalen Dual Port Memory zu lesen,
   - zu verarbeiten und
   - an die Kommunikations-ALU TPA zu übergeben
      bzw. von der Kommunikations-ALU RPA
   - entgegen zu nehmen,
   - zu verarbeiten und
   - in das lokale Dual Port Memory abzulegen.
- Der Zugriff auf das lokale Dual Port Memory erfolgt über zwei Register zweifach indiziert, um in einem Systemtakt auf die in der Kommunikationstechnik üblichen Datenstrukturen direkt zugreifen zu können.
- Die Schnittstelle zwischen den Kommunikations-ALUs PEA und der RPA bzw. TPA ist als FIFO ausgeprägt, um ein- bzw. ausgehende Daten zwischen zu speichern.
- Die Schnittstelle zwischen dem Kommunikations-Controller KC und der übergeordneten Steuereinrichtung CPU ist als DMA-Controller zur schnellen Übertragung von großen Datenmengen als auch als Dual-port Memory zum Führen von Statusvariablen als auch als gemeinsamer Registersatz zur Synchronisation ausgeprägt.
- Um die Kommunikations-ALUs PEA, RPA bzw. TPA untereinander zu synchronisieren, ist ein Satz gemeinsamer Register vorgesehen auf die jede Kommunikations-ALU PEA, RPA bzw. TPA schreiben als auch lesen kann.
- Auf die gemeinsamen Register kann auch die übergeordnete Steuereinrichtung CPU zugreifen, um den Kommunikationsstatus zu monitoren bzw. zu steuern.

Weitere Funktionen der Kommunikations-ALU TPA, welche per Software bei Ethernet-Protokollen realisiert sind, sind: Abbilden der zu sendenden Bytes, Erkennen von Kollisionen im Halbduplexbetrieb und Ausführen eines Back-Off-Algorithmus, Zurverfügungstellen von Transmit-Status-Informationen an die Kommunikations-ALU PEA nach Beenden eines Sendevorganges, Einhalten der Ruhezeit Inter-Packet-Gap (IPG) zwischen zwei Telegrammen, Ergänzen der Sendedaten um eine Präambel, einen Start-Off-Frame-Delimeter (SFD) und ein parametrierbares Cyclic-Redundancy-Check-Wort (CRC), Auffüllen eines Telegramms mit Pad-Bytes, wenn die Telegrammlänge < 60 Byte wäre, und ein Abbrechen eines Sendevorgangs auf Anforderung. Weitere Funktionen der Kommunikations-ALU RPA sind: die empfangenen Bytes der Kommunikations-ALU PEA zur Verfügung zu stellen, Erkennen des Start-Of-Frame-Delimeter und eines VLAN-Frame (Virtuell- LAN), Überprüfen des Längenfelds und des CRC-Worts in Telegrammen, nach Beendigung des Empfangsvorgangs Receive-Status-Informationen der Kommunikations-ALU PEA zur Verfügung zu stellen sowie Entfernen bei Telegrammen von Präambel und Start-Of-Frame-Delimeter.

Diese Kommunikations-ALUs PEA, RPA bzw. TPA arbeiten mit der übergeordneten Steuereinrichtung CPU zusammen, welche mit im Schaltkreis integriert aber auch extern angeordnet sein kann. Ist die übergeordnete Steuereinrichtung CPU integriert, kann der Schaltkreis die Kommunikationsfunktionen ausführen und er führt neben der Kommunikation die gesamte Applikation aus und hat dann zum Anschluss von externem Speicher und Peripheriebausteinen den internen Systembus rausgeführt. Es bietet sich an für beide Betriebsarten die gleichen Signale zu benutzen und diese per Software umzuschalten. Dabei können der Registersatz SR und das Dual-port Memory DPM der Kommunikations-ALUs RPA, TPA, PEA parallel zum laufenden Betrieb von der übergeordneten Steuereinrichtung (CPU) gelesen und beschrieben werden, so dass eine industrielle Echtzeit-Ethernet-Lösung mit Netzwerkzyklen und Präzision im Mikrosekundenbereich ermöglicht wird, welche keine Unterstützung durch proprietäre Hardwarekomponenten oder ASICs benötigt. Dies gilt auch für die Optimierung und Anpassung der Echtzeit-Übertragung, wie Anpassung an die Anforderungen der Anwendung, des Systems und der Kommunikations-Architektur, so dass ein durchgängiger Datenzugriff von der Management- bis zur Feldebene gewährleistet ist.

Wie in **FIG. 1** dargestellt, enthält die Vorrichtung auch einen Data Switch DS, welcher beispielsweise eine 32-Bit Steuereinrichtung CPU und die anderen Kommunikations-ALUs PEA (wobei in **FIG. 1** drei getrennte Kommunikations-Controller KC dargestellt sind) mit einem Speicher SP, der internen Peripherie PE verbindet. Der Data Switch DS vermeidet den aus anderen Kommunikations-Prozessoren bekannten "Flaschenhals" eines gemeinsamen Busses, indem er den gleichzeitigen Zugriff der Masterports über die verschiedenen Slaveports (im Beispielsfall zwei) auf die Daten ermöglicht.

Bei dem in **FIG. 1** dargestellten Kommunikations-Prozessor KP weist dieser drei frei programmierbare Kommunikations- Controller KC mit jeweils drei Kommunikations-ALUs RPA, TPA, PEA auf. Die erste Kommunikations-ALU RPA hat, wie bereits vorstehend beschrieben, die Aufgabe, entsprechend der Übertragungsrate den empfangenen Bit- bzw. Nibble- (halbes Byte) seriellen Datenstrom zu dekodieren und in eine parallele Darstellung (z.B. Byte, Wort oder Doppelwort) zu konvertieren, die zweite Kommunikations-ALU TPA hat, wie bereits vorstehend beschrieben, die Aufgabe, Daten aus einer parallelen Darstellung in Bit- bzw. Nibble-seriellen Datenstrom zu kodieren und mit der richtigen Übertragungsrate auf die Leitung zu geben und die dritte Kommunikations-ALU PEA hat, wie bereits vorstehend beschrieben, die Aufgabe, den Sende- und Empfangsverlauf eines zusammengehörigen Datenpakets zu steuern.

Bei der in **FIG. 1** dargestellten Ausführungsform dient der Kommunikations- Prozessor KP mit einer Puls-Weiten-Modulationsstufe PWM zur Ansteuerung der Motorendstufe, einer Encoderlogik EL zum Einlesen der Istposition und eine Sample- and - Hold - Stufe SH sowie einer Analog-/Digitalwandler AD zum Messen der Phasenspannung und des Motorstroms. Dabei werden insbesondere die Position, Motorspannung und Motorstrom bzw. Phasenspannung zwischen Kommunikations-Controller KC und Antrieb übertragen.

Wie in **FIG. 1** dargestellt, enthält der Kommunikations-Prozessor KP auch den Data Switch DS, welcher beispielsweise die nachgeschaltete (übergeordnete) 32-Bit Steuereinrichtung CPU und die Kommunikations-ALUs KC mit dem Speicher SP und der internen Peripherie PE verbindet. Die Kommunikations-ALUs RPA und TPA können mehrere Befehle parallel ausführen. Dazu kann, wie bereits vorstehend beschrieben, ein breiter Befehlscode BC benutzt werden, z.B. 64 Bit, in dem mehrere Befehle kodiert sind. Dies können z.B. logische Operationen, Programmsprünge, Setzen und Löschen von Bits, Inkrementieren und Dekrementieren von Zählern, Transfer von Daten und Bedienen von speziellen Funktionsregistern sein. Im Gegensatz zu herkömmlichen ALUs werden diese Befehle in einem Takt parallel ausgeführt. Entsprechend überwacht die Kommunikations-ALU PEA im Gegensatz zu herkömmlichen ALUs eine Vielzahl von speziellen Ereignissen per Hardware parallel. Dies kann z.B.:
- die Übergabe bestimmter Daten von der Kommunikations-ALU RPA bzw. zur Kommunikations-ALU TPA bzw. zur nachgeschalteten (übergeordnete) Steuereinrichtung CPU,
- das Ablaufen von Zeiten,
- das Erreichen bestimmter Zählerstände oder
- das Setzen bestimmter Zustandsbits sein.

Wenn eines oder eine bestimmte Kombination von Ereignissen eingetreten ist, reagiert die Kommunikations-ALU PEA innerhalb eines Systemtakts durch Abarbeitung eines dem Ereignis zugeordneten Stück Programmcodes.

Die Kommunikations-ALU PEA ist ferner in der Lage innerhalb eines Systemtakts:
- einen Date aus einem lokalen Speicher SR zu lesen,
- zu verarbeiten und an die Kommunikations-ALU TPA zu übergeben bzw. von der Kommunikations-ALU RPA
- entgegen zu nehmen,
- zu verarbeiten und in dem lokalen Speicher SR abzulegen.

Der Zugriff auf den lokalen Speicher erfolgt über zwei Register zweifach indiziert, um in einem Systemtakt auf die in der Kommunikationstechnik üblichen Datenstrukturen direkt zugreifen zu können. Der Data Switch DS vermeidet, wie bereits vorstehend beschrieben, somit den aus anderen Kommunikations-Prozessoren KP bekannten "Flaschenhals" eines gemeinsamen Busses, indem er den gleichzeitigen Zugriff der verschiedenen Masterports (im Beispielsfall zwei) über die verschiedenen Slaveports (im Beispielsfall drei) auf die Daten ermöglicht. Dadurch können die Speicher parallel zum laufenden Betrieb gelesen und beschrieben werden, so dass eine industrielle Echtzeit- Ethernet-Lösung mit Netzwerkzyklen und Präzision im Mikrosekundenbereich ermöglicht wird, welche keine Unterstützung durch proprietäre Hardwarekomponenten oder ASICs benötigt. Dies gilt auch für die Optimierung - und Anpassung der Echtzeit-Übertragung, wie Anpassung an die Anforderungen der Anwendung, des Systems und der Kommunikations-Architektur, so dass ein durchgängiger Datenzugriff von der Management- bis zur Feldebene gewährleistet ist.

Die Kommunikationsfunktionen sind nicht fest vorgegeben, sondern auf Basis von frei programmierbaren und auf Kommunikationsfunktionen optimierten Kommunikations-ALUs KA ausgebildet. Der Kommunikations-Prozessor KP konfiguriert in der Startphase den Kommunikations-Controller KC passend und lädt die zugehörige Firmware selbständig. Weiterhin beinhaltet der Kommunikations-Prozessor KP mehrere frei programmierbare Kommunikations-Controller KC und kann damit beliebige Kombinationen an Kommunikations-Standards realisieren. Vorzugsweise ist vorgesehen, dass der Kommunikations-Prozessor KP auf der Basis mehrerer frei programmierbarer Kommunikations-Controller KC neben den Kommunikations-Protokollen auch die Applikation ausführen kann. Bei der in **FIG. 1** dargestellten Ausführungsform arbeiten die frei programmierbaren Kommunikations-ALUs RPA, TPA, PEA völlig deterministisch und führen ohne die nachgeschaltete Steuereinrichtung CPU die synchronen Antriebsfunktionen selbständig aus und die Kommunikations-Controller KC melden zu den Synchronisationszeitpunkten ein Date oder Ereignis per Interrupt der Steuereinrichtung CPU. Zwischen den Synchronisationszeitpunkten beispielsweise ausgelöst durch einen Broadcast (zu fest definierten Zeitpunkten)) werden die über die beiden Encoderlogiken EL oder einer Sample-Hold-Schaltung SH und einen AD-Wandler AD übertragenen Messwerte (Position oder Motorstrom bzw. Phasenspannung) bzw. über einen PWM-Modulator PWM übertragenen Stellwerte mit der nachgeschalteten CPU ausgetauscht, womit deren Interruptlatenzzeiten dann nicht in die Synchronisation der Antriebsfunktionen eingehen. Eine direkte Synchronisation von Antriebsfunktionen, insbesondere das Messen der Position oder das Ausgeben der Stellgrößen, wird auf schnelle, deterministische und jitterfreie Kommunikationsverbindungen, insbesondere Realtime-Ethernet Verbindungen wie z.B. PROFINET, POWERLINK, SERCOS-3, EtherCAT ermöglicht.

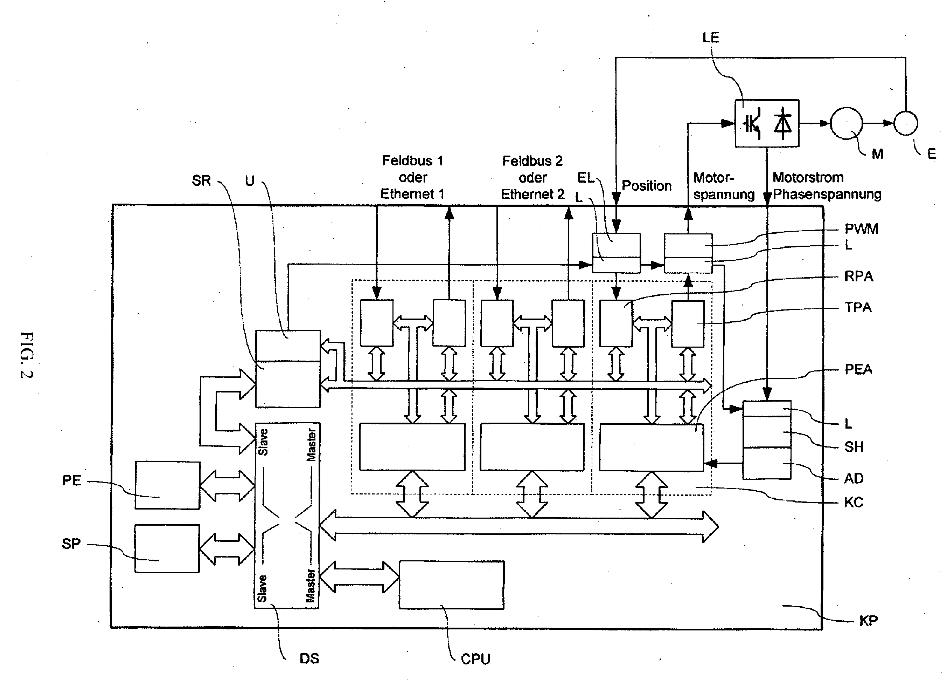

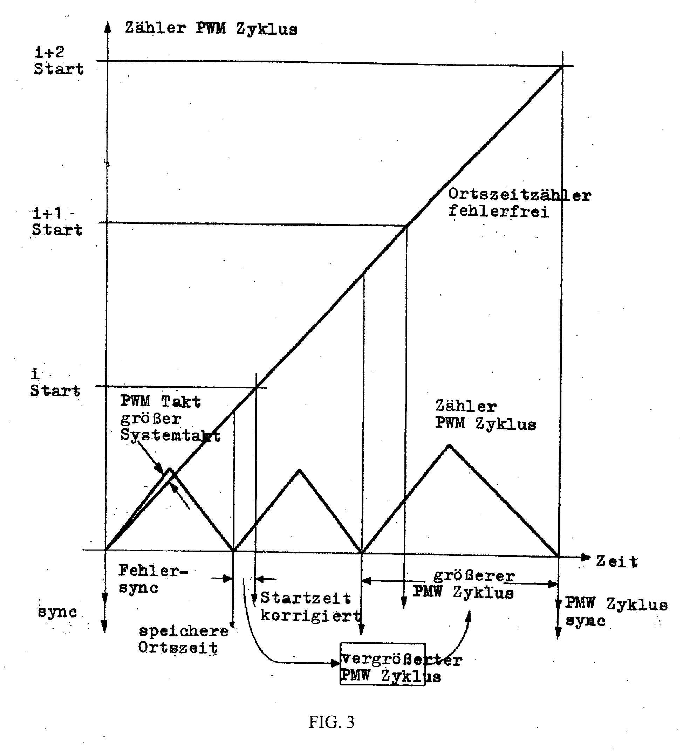

Alternativ dazu kann der Antrieb eine lokale Zeit fuhren, die über Kommunikationsverbindungen mit den lokalen Zeiten auf anderen Antrieben auf eine innerhalb einer Automatisierungsanlage gemeinsamen Systemzeit synchronisiert werden. Zu fest definierten Zeitpunkten können dann auf den einzelnen Antrieben die synchronen Funktionen, wie das Messen der Position oder das Ausgeben des Motorstroms, aktiviert werden. Besondere Schwierigkeit besteht darin, dass die dazu benötigten Funktionen zyklisch ablaufen und der gesamte Zyklus sowohl in seiner Zykluszeit als auch in seiner Phasenlage auf die lokale Zeit zu synchronisieren ist. Bei der in **FIG. 2** dargestellten Ausführungsform sind im Vergleich zur Ausführungsform nach **FIG. 1** zusätzlich eine lokale Uhr U und im Verbindungsweg der Kommunikations-ALUs RPA, TPA, PEA jeweils ein Latch L angeordnet. Zum Startzeitpunkt von zyklisch ablaufenden Steuerungsfunktionen wird die synchronisierte lokale Zeit im Latch L abspeichert, es wird durch Differenzbildung mit der im Latch L gespeicherten Zeit im letzten Startpunkt die Zykluszeit auf Basis der Zeit der lokalen Uhr U gemessen und schließlich wird durch Vergrößern oder Verkleinern der aktuellen Zykluszeit, diese in Bezug auf die lokale Zeit konstant und in einer festen Phasenbeziehung gehalten. Dadurch ist der gesamte Zyklus sowohl in seiner Zykluszeit als auch in seiner Phasenlage auf die lokale Zeit synchronisiert, wie dies unmittelbar aus dem Zeitdiagramm der **FIG. 3** hervorgeht. Erfindungsgemäß wird also eine direkte Synchronisation von zyklischen Antriebsfunktionen, insbesondere das Messen der Position oder das Ausgeben der Stellgrößen, auf eine lokale Systemzeit ermöglicht, die durch geeignete Protokolle, insbesondere IEEE 1588, innerhalb des Automatisierungssystems auf einen Gleichlauf nachgeregelt wird.

Auch wenn die Ausgestaltung der Lösung für den Einsatz bei der Automatisierungstechnik, insbesondere für Antriebsfunktionen beschrieben ist, (einschließlich universelle Kommunikations-Plattform für Barcode- und Identifikationssysteme, intelligente EAs, Low-Cost-Antriebe, SPSen oder Maschinenterminals) beschrieben ist, so ist der Einsatz des Verfahrens und der Vorrichtung auch in anderen Nachrichtennetzen mit entsprechenden Netzwerkübergängen möglich. Durch eine intelligente Verzahnung von Standardsteuerungs- und Sicherheitsfunktionen lassen sich sowohl Standardfunktionen als auch Sicherheitsfunktionen rückwirkungsfrei in einem System kombinieren. Die Modularität des Systems bietet dem Anwender große Flexibilität für maßgeschneiderte, jederzeit einfach erweiterbare Lösungen und erlaubt auch eine Migration. Dies ist darauf zurückzuführen, dass das erfindungsgemäße Konzept auf Vorleistungen in Nachrichtennetzen oder Systemen/Anlagen (auch für vermittelte Verbindungen) aufbaut und die einfache Anpassung an die jeweiligen Gegebenheiten und Einbindung ohne Änderung der Erfindung bzw. des Grundkonzepts erlaubt. Beispielsweise ermöglicht das erfindungsgemäße Verfahren einen kostengünstigen Aufbau beliebig vernetzbarer Busteilnehmer mit individueller interaktiver Kommunikation über beliebige drahtlose oder drahtgebundene Netzwerke bzw. Telekommunikationsnetze (beispielsweise UTRAN UMTS Terrestrial Radio Access Network). Der dabei ablaufende iterative Prozess des Netzwerkmanagementdienstes, insbesondere hinsichtlich des Dialogs umfasst alle sinnvoll vorkommende Dialogelemente (z.B. Initialisieren, Konfigurieren, Starten und Stoppen von Busteilnehmern (Geräten) oder Programmen, Kommunikationsprotokollen), welche entsprechend hinterlegt sind, kann insbesondere auch bei inhomogenen Strukturen eingesetzt werden und erlaubt auch ein Dialogmonitoring mit Einschluss der Busteilnehmer und des Dialogservers im Telekommunikationsnetz. So wird beispielsweise ein Zugriff auf Daten, Parameter, Funktionen in jedem Busteilnehmer von jedem Ort aus via Internet und auch eine einheitliche, geräteunabhängige Fehlerbehandlung ermöglicht. Weiterhin kann in vorteilhafter Weise die Initialisierung neuer und der Austausch fehlerhafter Geräte durch Plug- & Play verwirklicht werden und die flexiblen Kommunikations-Mechanismen ermöglichen den einfachen Einsatz in vielen Anwendungsfällen und Systemarchitekturen. Beispielsweise können bei der Lösung nicht nur Master/Slave-Systeme sondern auch verteilte Steuerungen, welche zumindest partiell nichthierarchische Netzwerkarchitektur mit Durchlässigkeit in beide Richtungen erfordern, realisiert werden. In Weiterbildung der Erfindung können beispielsweise im Dialogserver für TCP/IP und SPX/IPX Routing-Funktionalitäten (auch als LCR Least Cost Router) installiert werden usw.

## Patentansprüche

1. Verfahren zur Synchronisation von untereinander über einen seriellen Datenbus kommunizierenden Busteilnehmern eines Automatisierungssystems mit verteilter Steuerung, wobei das Verfahren darin gekennzeichnet ist, dass einer der Busteilnehmer mindestens einen Kommunikations-Controller (KC) aufweist, dass einer der mindestens einen Kommunikations-Controller, der im folgenden Text als der Kommunikations-Controller genannt wird, über drei frei programmierbare Kommunikations -ALUs (RPA, TPA, PEA), die nämlich die erste Kommunikations-ALU (RPA), die zweite Kommunikations-ALU (TPA) und die dritte Kommunikations-ALU (PEA) genannt werden, mit einer nachgeschalteten Steuereinrichtung (CPU) zusammenarbeitet, und
dass das Verfahren die folgenden Schritte aufweist:
der Kommunikations-Controller (KC) detektiert das Auftreten eines bestimmten Datums oder Ereignisses,
die Kommunikations -ALUs (RPA, TPA, PEA) führen völlig deterministisch und ohne die nachgeschaltete Steuereinrichtung synchrone Steuerungsfunktionen selbständig aus, indem die erste Kommunikations-ALU (RPA) entsprechend der Übertragungsrate den empfangenen Bit- bzw. Nibble- seriellen Datenstrom dekodiert und in eine parallele Darstellung konvertiert, die zweite Kommunikations-ALU (TPA) Daten aus einer parallelen Darstellung in Bit- bzw. Nibble-seriellen Datenstrom kodiert und mit der richtigen Übertragungsrate auf die Leitung gibt und die dritte Kommunikations-ALU (PEA) den Sende- und Empfangsverlauf eines zusammengehörigen Datenpakets steuert, und
• zwischen den Synchronisationszeitpunkten werden die Mess- und Stellwerte zwischen dem Kommunikations-Controller (KC) und der Steuereinrichtung (CPU) ausgetauscht, wobei der Kommunikations-Controller (KC), die drei Kommunikations -ALUs (RPA, TPA, PEA) und die Steuereinrichtung (CPU) daran angepasst sind, dass die Interruptlatenzzeiten der nachgeschalteten Steuereinrichtung (CPU) nicht in die Synchronisation eingehen.

2. Verfahren zur Synchronisation von untereinander über einen seriellen Datenbus kommunizierenden Busteilnehmern eines Automatisierungssystems mit verteilter Steuerung, wobei das Verfahren darin gekennzeichnet ist, dass einer der Busteilnehmer mindestens einen Kommunikations-Controller (KC) aufweist, und dass einer der mindestens einen Kommunikations-Controller, der im folgenden Text als der Kommunikations-Controller genannt wird, über drei frei programmierbare Kommuikations-ALUs (RPA, TPA, PEA), die nämlich die erste Kommunikations-ALU (RPA), die zweite Kommunikations-ALU (TPA) und die dritte Kommunikations-ALU (PEA) genannt werden, mit einer nachgeschalteten Steuereinrichtung zusammenarbeitet,
und dass das Verfahren die folgenden Schritte aufweist:
▪die programmierbaren Kommunikations-ALUs führen völlig deterministisch und ohne die nachgeschaltete Steuereinrichtung synchrone Steuerungsfunktionen selbständig aus, indem die erste Kommunikations-ALU (RPA) entsprechend der Übertragungsrate den empfangenen Bit- bzw. Nibble- seriellen Datenstrom dekodiert und in eine parallele Darstellung konvertiert,
die zweite Kommunikations-ALU (TPA) Daten aus einer parallelen Darstellung in Bit- bzw. Nibble-seriellen Datenstrom kodiert und mit der richtigen Übertragungsrate auf die Leitung gibt,
die dritte Kommunikations-ALU (PEA) den Sende- und Empfangsverlauf eines zusammengehörigen Datenpakets steuert,
▪ da die Steuerungsfunktionen zyklisch ablaufend sind und eine Zykluszeit haben, eine synchronisierte lokale Zeit wird zum Startzeitpunkt von den zyklisch ablaufenden Steuerungsfunktionen in einem Latch (L) abgespeichert,
▪ die Zykluszeit wird durch Differenzbildung mit einer zum letzten Startzeitpunkt als synchronisierte lokale Zeit gespeicherten Zeit auf Basis einer lokalen Zeit einer lokalen Uhr (U) gemessen, und
eine aktuelle Zykluszeit wird durch Vergrößern oder Verkleinern der aktuellen Zykluszeit mittels Kommunikations-Controller (KC) in Bezug auf die lokale Zeit (U) konstant gehalten und in einer festen Phasenbeziehung gehalten, und
▪ der gesamte Zyklus wird sowohl in seiner Zykluszeit als auch in seiner Phasenlage auf die lokale Zeit synchronisiert, wobei der Kommunikations-Controller (KC), die drei Kommunikations -ALUs (RPA, TPA, (PEA) und die Steuereinrichtung (CPU) daran angepasst sind, dass die Interruptlatenzzeiten der nachgeschalteten Steuereinrichtung (CPU) nicht in die Synchronisation eingehen.

3. Verfahren nach Anspruch 1, das weiter den folgenden Schritt aufweist: der Kommunikations-Controller (KC) führt eine Synchronisation von Antriebsfunktionen durch, wie ein Messen einer Position oder ein Ausgeben einer Stellgrößen, auf schnelle, deterministische und jitterfreie Kommunikationsverbindungen.

4. Verfahren nach Anspruch 2, das weiter den folgenden Schritt aufweist: eine Synchronisation von zyklischen Antriebsfunktionen wird auf eine lokale Systemzeit innerhalb des Automatisierungssystems nachregelt, die durch geeignete Protokolle inklusiv IEEE 1588 basiert.

5. Verfahren nach Anspruch 2, das weiter die folgenden Schritte aufweist:
der Kommunikations-Controller (KC) aktiviert zu fest definierten Zeitpunkten synchrone Funktionen auf einzelne Antrieben, und
Mess- und Stellwerte werden ausgetauscht.

6. Verfahren nach Anspruch 1 oder 2, das weiter die folgenden Schritte aufweist:
die Kommunikations-ALUs (RPA, TPA, PEA) benutzen einen breiten Befehlscode, in welchem mehrere Befehle kodiert sind, und diese Befehle werden in den Kommunikations-ALUs (RPA, TPA, PEA) in einem Takt parallel ausgeführt.

7. Verfahren nach Anspruch 1 oder 2, das weiter die folgenden Schritte aufweist:
der Kommunikations-Prozessor (KP) konfiguriert den Kommunikations-Controller (KC) in der Startphase und lädt und selbständig die zugehörige Firmware.

8. Verfahren nach Anspruch 1 oder 2, das weiter den folgenden Schritt aufweist:
der Kommunikations-Prozessor (KP) führt Kommunikationsprotokollen und eine Applikation aus.

9. Verfahren nach Anspruch 5, das weiter die folgenden Schritte durch die dritte Kommunikations-ALU (PEA) innerhalb eines Systemtakts aufweist:
ein Datum wird aus einem lokalen Speicher (SR) gelesen, verarbeitet und an die zweite Kommunikations-ALU (TPA) übergeben,
oder das weiter die folgenden Schritte durch die dritte Kommunikations-ALU innerhalb eines Systemtakts aufweist:
ein Datum wird von der ersten Kommunikations-ALU (RPA) entgegengenommen, verarbeitet und im lokalen Speicher (SR) abgelegt.

10. Vorrichtung zur Synchronisation von untereinander über einen seriellen Datenbus kommunizierenden Busteilnehmern eines Automatisierungssystems mit verteilter Steuerung, wobei die Vorrichtung den seriellen Datenbus und die Busteilnehmer aufweist,
wobei die Vorrichtung darin gekennzeichnet ist, dass ein der Busteilnehmer ein Kommunikations-Prozessor (KP) mit mindestens einem Kommunikations-Controller (KC), wobei einer der mindestens einen Kommunikations-Controller im folgenden Text als der Kommunikations-Controller genannt wird, und einer dem Kommunikations-Controller (KC) nachgeschalteten Steuereinrichtung (CPU) aufweist, wobei der Kommunikations-Controller drei frei programmierbare Kommunikations-ALUs (RPA, TPA, PEA) aufweist, die nämlich die erste Kommunikations-ALU (RPA), die zweite Kommunikations-ALU (TPA) und die dritte Kommunikations-ALU (PEA) genannt werden,
wobei die Kommunikations-ALUs daran angepasst sind, völlig deterministisch und ohne die nachgeschaltete Steuereinrichtung synchrone Steuerungsfunktionen selbständig auszuführen, indem
die erste Kommunikations-ALU (RPA) entsprechend der Übertragungsrate den empfangenen Bit- bzw. Nibble- seriellen Datenstrom dekodiert und in eine parallele Darstellung konvertiert, die zweite Kommunikations-ALU (TPA) Daten aus einer parallelen Darstellung in Bit- bzw. Nibble-seriellen Datenstrom kodiert und mit der richtigen Übertragungsrate auf die Leitung gibt, die dritte Kommunikations-ALU (PEA) den Sende- und Empfangsverlauf eines zusammengehörigen Datenpakets steuert,
wobei der Kommunikations-Controller (KC) daran angepasst ist, das Auftreten eines bestimmten Datums oder Ereignisses zu detektieren,
wobei die Vorrichtung einen Logikfunktionsblock (U, L) des Kommunikations-Prozessors (KP) mit Mitteln zur Messung und Speicherung von Zeiten in der Kommunikations -ALUs (RPA, TPA, PEA) aufweist, und wobei der Kommunikations-Controller (KC), die drei Kommunikations -ALUs (RPA, TPA, PEA) und die Steuereinrichtung (CPU) daran angepasst sind, dass die Interruptlatenzzeiten der nachgeschalteten Steuereinrichtung (CPU) nicht in die Synchronisation eingehen.

11. Vorrichtung nach Anspruch 10, die weiter eine Puls-Weiten-Modulationsstufe (PWM) zur Ansteuerung einer Motorendstufe, eine Encoderlogik (EL) zum Einlesen einer Istposition, eine Sample- and - Hold-Stufe (SH) sowie ein Analog-/Digitalwandler (AD) aufweist, die daran angepasst sind, eine Position, Motorspannung und Motorstrom bzw. Phasenspannung zwischen Kommunikations-Controller (KC) und Antrieb (M) zu übertragen.

12. Vorrichtung nach Anspruch 10, wobei der Kommunikations-Prozessor (KP) einen Data Switch (DS) aufweist, welcher die Steuereinrichtung (CPU) und den jeweiligen Kommunikations-Controller (KC) mit einem Speicher (SP), in welchem die Daten für den Datenaustausch mit der Steuereinrichtung (CPU) abgespeichert werden, und einer internen Peripherie (PE) verbindet.

13. Vorrichtung nach Anspruch 10, wobei der Kommunikations-Prozessor (KP) mehrere frei programmierbare Kommunikations-Controller (KC) aufweist, die unterschiedliche Kombinationen an Kommunikations-Standards realisieren.

14. Vorrichtung nach Anspruch 10, wobei der Kommunikations-Prozessor (KP) eine lokale Uhr (U) und im Verbindungsweg der Kommunikations-ALUs (RPA, TPA, PEA) jeweils ein Latch (L) aufweist.

15. Vorrichtung nach Anspruch 12, die weiter einen mit dem Data Switch (DS) verbundenen lokalen Speicher (SR) aufweist, der daran angepasst ist, die Daten für den Datenaustausch zwischen den Kommunikations-ALUs (RPA, TPA, PEA) abzuspeichern.

## Claims

1. A method for synchronizing bus subscribers of a distributed control automation system communicating with one another via a serial data bus, wherein the method is **characterized in that** one of said bus subscribers having at least one communication controller, wherein one communication controller of said communication controller named following communication controller (KC) cooperates via three freely programmable communication-ALUs (RPA, TPA, PEA), namely named the first communication-ALU (RPA), the second communication-ALU (TPA) and the third communication-ALU (PEA), with a downstream control device (CPU) and that the method comprising the following steps:
• said communication controller (KC) detects the occurrence of a specific date or event,
• said communication-ALUs (RPA, TPA, PEA) autonomously and without said downstream control device (CPU) performs completely deterministic the synchronous control functions, whereby le method comprising the following steps:
- said first communication-ALU (RPA) decodes corresponding to the transmission rate of the received bit or nibble serial data stream and converts it into a parallel representation,
- said second communication-ALU (TPA) encodes data from a parallel representation into a bit- or nibble-serial data stream and applies it with the correct transmission rate to the line and
- said third communication-ALU (PEA) controls the transmission and reception history of a related data packet and
• between the synchronization times the measurement and control values are exchanged between said communication controller (KC) and said control device (CPU), whereby said communication controller (KC), said three communication-ALUs (RPA, TPA, PEA) and said control device (CPU) are adapted such, that the interrupt latency period of the downstream control device (CPU) do not affect the synchronization.

2. A method for synchronizing bus subscribers of a distributed control automation system communicating with one another via a serial data bus, wherein the method is **characterized in that** one of said bus subscribers having at least one communication controller and that one communication controller of said communication controller named following communication controller (KC) cooperates via three freely programmable communication-ALUs (RPA, TPA, PEA), namely named the first communication-ALU (RPA), the second communication-ALU (TPA) and the third communication-ALU (PEA), with a downstream control device (CPU) and that the method comprising the following steps:
• said communication-ALUs (RPA, TPA, PEA) autonomously and without said downstream control device (CPU) performs completely deterministic the synchronous control functions, whereby:
- said first communication-ALU (RPA) decodes corresponding to the transmission rate of the received bit or Nibble serial data stream is and converts it into a parallel representation,
- said second communication-ALU (TPA) encodes data from a parallel representation into a bit- or nibble-serial data stream and applies it with the correct transmission rate to the line,
- said third communication-ALU (PEA) controls the transmission and reception history of a related data packet,
• as the control functions are cyclic and have a cycle time a synchronized local time is
- stored in a latch (L) at the starting point of said cyclically control functions,
• the cycle time is measured by taking the difference with a synchronized local time stored at the last starting point on the basis with respect to a local time of a local clock (U) and,
• a current cycle time is keeping constant and hold in a fixed phase relation to a local time (U) by increasing or decreasing the current cycle time by means of said control device (CPU) and
• said entire cycle was synchronized both in cycle time and phase to the local time (U) whereby said communication controller (KC), said three communication-ALUs (RPA, TPA, PEA) and said control device (CPU) are adapted such, that the interrupt latency period of the downstream control device (CPU) do not affect the synchronization.

3. The method according to claim 1, comprising the additional following step:
said communication controller (KC) carry out a synchronization of drive functions (M), such as the measurement of the position or the outputting of a manipulated variable, to fast, deterministic and jitter-free communication connections.

4. The method according to claim 2, comprising the additional following step:
a synchronization of cyclically drive functions (M) is readjusted to a local system time, which is based on suitable protocols, including IEEE 1588, within said automation system.

5. The method according to claim 2, comprising the additional following step:
said communication controller (KC) activates synchronized function of the individual drives (M) at fixed time points and the measured and control values are exchanged.

6. The method according to claim 1 or 2, comprising the additional following step:
said communication-ALUs (RPA, TPA, PEA) uses a wide instruction code in which a plurality of instructions are encoded and said instructions can be executed in the communication-ALUs (RPA, TPA, PEA) in parallel in one cycle.

7. The method according to claim 1 or 2, comprising the additional following step:
said communication processor (KP) configures the communication controller (KC) in the start-up phase and loads independently the associated firmware.

8. The method according to claim 1 or 2, comprising the additional following step:
said communication processor (KP) executes the communication protocols and an application.

9. The method according to claim 5, comprising the additional following steps:
within a system clock said third communication-ALU (PEA):
- reads out a data from a local memory (SR), processed and transferred to said second communication-ALU (TPA),
or comprising the additional following steps of said third communication-ALU (PEA) within a system clock:
accepts an event from the first communication-ALU (RPA), processes it and stores it in local storage (SR).

10. A device for synchronizing bus subscribers of a distributed control automation system communicating with one another via a serial data bus, wherein the device having said serial data bus and said bus subscribers, wherein the device is **characterized in that** one of said bus subscribers having a communication processor with at least one communication controller (KC), wherein one communication controller of said communication controller named following communication controller (KC) and having a downstream control device (CPU), wherein said communication controller (KC) having three freely programmable communication-ALUs (RPA, TPA, PEA), namely named the first communication-ALU (RPA), the second communication-ALU (TPA) and the third communication-ALU (PEA), wherein said communication-ALUs (RPA, TPA, PEA) are adapted to carry out completely deterministic the synchronous control functions without said
control device (CPU), whereby said first communication-ALU (RPA) decodes corresponding to the transmission rate of the received bit or nibble serial data stream and converts it into a parallel representation, said second communication-ALU (TPA) encodes data from a parallel representation into a bit- or nibble-serial data stream and applies it with the correct transmission rate to the line and said third communication-ALU (PEA) controls the transmission and reception history of a related data packet, wherein the communication controller (KC) is adapted to detect the occurrence of a particular date or event, wherein the device having a logic function block (U, L) of the communication processor (KP) with means for measuring and storing times in said communication-ALUs (RPA, TPA, PEA) and wherein said communication controller (KC), said three communication-ALUs (RPA, TPA, PEA) and said control device (CPU) are adapted such, that the interrupt latency period of the downstream control device (CPU) do not affect the synchronization.

11. A device according to claim 10, comprising additional a pulse-width modulation stage (PWM) for controlling a motor output stage, an encoder logic (EL) for reading an actual position, a sample and - Hold - stage (SH) and an analog / digital converter (AD), which are adapted to transmit a position, motor voltage and motor current or phase voltage between said communication controller (KC) and a drive (M).

12. A device according to claim 10, wherein said communication processor (KP) comprises a data switch (DS), which connects said control device (CPU) and the respective communication controller (KC), having a memory (SP), which stores the data for the data exchange with the control device (CPU), to an internal peripheral (PE).

13. A device according to claim 10, wherein said communication processor (KP) comprises a plurality of freely programmable communication controller (KC), which realize different combinations of communication standards.

14. A device according to claim 10, wherein said communication processor (KP) comprises a local clock (U) and in the connection path of the communication-ALUs (RPA, TPA, PEA) each have a latch (L).

15. A device according to claim 12, having further a local memory (SR), which is adapted to store the data for the data exchange between the communication-ALUs (RPA, TPA, PEA) and connected to said data switch (DS).

## Revendications

1. Une méthode de synchronisation des abonnés d'un système d'automatisme à contrôle réparti communiquant via un bus de données série, à condition que le méthode **caractérisé en ce que** un des abonnés au bus à au moins un contrôleur de communication (KC), **en ce que** un des contrôleur de communication désigné ci-après comme le contrôleur de communication (KC) coopère par trois ALUs de communication (RPA, TPA, PEA) librement programmable, celui désigné ci-après comme le premier ALU de communication (RPA), la seconde ALU de communication (TPA) et la troisième ALU de communication (PEA), avec un dispositif de contrôle aval (CPU) et **en ce que** la méthode à des étapes suivantes:
• le contrôleur de communication (KC) détecté la survenue d'une date ou d'un événement spécifique,
• les ALUs de communication (RPA, TPA, PEA) exécuté de manière autonome les fonctions de contrôle synchrones et sans le dispositif de contrôle aval (CPU) et **en ce que** la méthode à des étapes suivantes:
- la premier ALU de communication (RPA) décodé correspond au débit de transmission le bit reçu ou en bits Nibble flux de données série codé et converti en une représentation parallèle,
- la seconde ALU de communication (TPA) codé d'une représentation parallèle en bits ou en bits Nibble flux de données série et provenant avec le débit de transmission correct sur la ligne et
- la troisième ALU de communication (PEA) contrôle l'historique d'émission et de réception d'un paquet de données associé et
• entre les temps de synchronisation, les valeurs de mesure et de contrôle entre le contrôleur de communication (KC) et le dispositif de contrôle (CPU) sont échangées, **en ce que** le contrôleur de communication (KC), les trois ALUs de communication (RPA, TPA, PEA) et le dispositif de contrôle (CPU) sont adapté de sorte que la latence d'interruption du dispositif de contrôle aval (CPU) n'a pas d'effet sur la synchronisation.

2. Une méthode de synchronisation des abonnés au bus d'un système d'automatisme à contrôle réparti, à condition que le méthode **caractérisé en ce que** un des abonnés au bus à au moins un contrôleur de communication (KC), **en ce que** un des contrôleur de communication désigné ci-après comme le contrôleur de communication (KC) coopère par trois ALUs de communication (RPA, TPA, PEA) librement programmable, celui désigné ci-après comme le premier ALU de communication (RPA), la seconde ALU de communication (TPA) et la troisième ALU de communication (PEA), avec un dispositif de contrôle aval (CPU) et **en ce que** la méthode à des étapes suivantes:
• les ALUs de communication (RPA, TPA, PEA) exécute de manière autonome les fonctions de contrôle synchrones et sans le dispositif de contrôle aval (CPU) et pour ce qui:
- la premier ALU de communication (RPA) décodé correspond au débit de transmission le bit reçu ou en bits Nibble flux de données série codé et converti en une représentation parallèle,
- la seconde ALU de communication (TPA) codé d'une représentation parallèle en bits ou en bits Nibble flux de données série et provenant avec le débit de transmission correct sur la ligne et
- la troisième ALU de communication (PEA) contrôle l'historique d'émission et de réception d'un paquet de données associé,
• car les fonctions de contrôle sont cyclique et ont une durée du cycle, l'heure locale synchronisée est
- stockée dans une bascule (L) au point de départ des fonctions de contrôle cyclique,
• la durée du cycle est mesurée
- en prenant la différence avec une l'heure mémorisée au dernier point de départ et en fonction de l'heure locale (U) et
• une durée du cycle en cours est maintenant constante et dans une relation de phase fixe par augmentant ou diminuant en rapport à l'heure locale (U) par le contrôleur de communication (KC) et,
• le cycle complet est synchronisé aussi bien en durée du cycle qu'en relation de phase du l'heure locale (U), **en ce que** le contrôleur de communication (KC), les trois ALUs de communication (RPA, TPA, PEA) et le dispositif de contrôle (CPU) sont adapté de sorte que la latence d'interruption du dispositif de contrôle aval (CPU) n'a pas d'effet sur la synchronisation.

3. Le méthode selon la revendication 1, comprenant en outre l'étape consistant à:
le contrôleur de communication (KC) fait une synchronisation des fonctions d'entraînement, en particulier mesurer une position ou émettre des variables manipulées a lieu sur des connexions de communication rapides, déterministes et sans gigue.

4. Le méthode selon la revendication 2, comprenant en outre l'étape consistant à:
une synchronisation des fonctions d'entraînement cycle est réajustée au l'heure système du système d'automatisation par des protocoles appropriés, en particulier IEEE 1588.

5. Le méthode selon la revendication 2, comprenant en outre l'étape consistant à:
le contrôleur de communication (KC) activé des fonctions d'entraînement cycle au points temporels défini et les valeurs de mesure et de contrôle sont échangées.

6. Le méthode selon les revendications 1 ou 2, comprenant en outre les étapes suivantes:
les ALU de communication (RPA, TPA, PEA) utilisent un code d'instruction large dans lequel une pluralité d'instructions sont codés et ces instructions peuvent être exécutées en parallèle sur un cycle dans les ALU de communication (RPA, TPA, PEA).

7. Le méthode selon les revendications 1 ou 2, comprenant en outre les étapes suivantes:
le processeur de communication (KP) dans la phase de démarrage configure le contrôleur de communication (KC) et charge indépendamment le micrologiciel associé.

8. Le méthode selon les revendications 1 ou 2, comprenant en outre les étapes suivantes:
le processeur de communication (KP) exécute des protocoles de communication et également une application.

9. Le méthode selon la revendication 5, celui dans une horloge système la troisième ALU de communication (PEA) comprenant en outre l'étape consistant à:
- extraire de la mémoire locale (SR) une donnée, la traité et la transféré vers la deuxième ALU de communication (TPA),
ou celui par la troisième ALU de communication (PEA) dans une horloge système comprenant en outre l'étape consistant à:
un événement à partir de la première ALU de communication (RPA) est accepté, le traité et le stocké dans la mémoire de stockage locale (SR).

10. Dispositif de synchronisation des abonnés d'un système d'automatisme à contrôle réparti communiquant via un bus de données série, en ce que le dispositif comprenant le bus de données série et les abonnés, en ce que le dispositif est caractérisé qu'un des abonnés à un processeur de communication (KP) comportant au moins un contrôleur de communication (KC), en ce que un des contrôleur de communication désigné ci-après comme le contrôleur de communication (KC) coopère par trois ALUs de communication (RPA, TPA, PEA) librement programmable, celui désigné ci-après comme le premier ALU de communication (RPA), la seconde ALU de communication (TPA) et la troisième ALU de communication (PEA), avec un dispositif de contrôle aval (CPU), en ce que les ALUs de communication (RPA, TPA, PEA) sont adapté exécute de manière autonome les fonctions de contrôle synchrones et sans le dispositif de contrôle aval (CPU) et en ce que la premier ALU de communication (RPA) décodé correspond au débit de transmission le bit reçu ou en bits Nibble flux de données série codé et converti en une représentation parallèle, la seconde ALU de communication (TPA) codé d'une représentation parallèle en bits ou en bits Nibble flux de données série et provenant avec le débit de transmission correct sur la ligne, la troisième ALU de communication (PEA) contrôle l'historique d'émission et de réception d'un paquet de données associé, en ce que le contrôleur de communication (KC) est adapté pour détecter la survenue d'une date ou d'un événement spécifique, en ce que le dispositif à un bloc de fonctions logique (U, L) du processeur de communication (KP) avec des moyens pour mesurer et mémoriser des instants dans l'ALU de communication (RPA, TPA, PEA) et en ce que le contrôleur de communication (KC), les trois ALU de communication (RPA, TPA, PEA) et le dispositif de contrôle (CPU) sont adapté de sorte que la latence d'interruption du dispositif de contrôle aval (CPU) n'a pas d'effet sur la synchronisation.

11. Le dispositif selon la revendication 10, comprenant encore un étage de modulation de largeur d'impulsion (PWM) pour commander l'étage de sortie du moteur, une logique de codage (EL) pour lire la position réelle, un étage de maintien (SH) et un convertisseurs analogique / numérique (AD), qui était adapté pour transmettre une position, la tension et le courant du moteur et la tension de phase entre le contrôleur de communication (KC) et le variateur (M).

12. Le dispositif selon la revendication 10, en ce que le processeur de communication (KP) à un commutateur de données (DS), celui connecté le dispositif de contrôle (CPU) et le contrôleur de communication respectif (KC) avec une mémoire (SP), dans laquelle les données pour les échanges de données avec le dispositif de contrôle (CPU) sont enregistrés, et un périphérique interne (PE).

13. Le dispositif selon la revendication 10, en ce que le processeur de communication (KP) à une pluralité de contrôleurs de communication (KC) librement programmables, celui réalisé différentes combinaisons de standards de communication.

14. Le dispositif selon la revendication 10, en ce que le processeur de communication (KP) à une horloge locale (U) et dans le chemin de connexion des ALU de communication (RPA, TPA, PEA) ont chacun un verrou (L).

15. Le dispositif selon la revendication 10, comprenant encore une mémoire locale (SR) relié au commutateur de données (DS), celui était adapté pour mémoriser les données pour l'échange de données entre les ALU de communication (RPA, TPA, PEA).
